# EUROPEAN PATENT APPLICATION

(11) **EP 4 831 870 A1**
(43) Date of publication of application: **28.10.2026**
(21) Application number: 25738353.9
(22) Date of filing: 06.01.2025
(51) Int. Cl.: G06N 3/008

(54) **TRAINING METHOD FOR ACTION DECISION-MAKING MODEL OF INTELLIGENT AGENT, AND ACTION DECISION-MAKING METHOD AND APPARATUS**

(30) Priority: 09.01.2024 CN 202410039699
(71) Applicant: Tencent Technology (Shenzhen) Company Limited, Shenzhen, Guangdong 518057 (CN)
(72) Inventor: BAI, Fengshuo, Shenzhen, Guangdong 518057 (CN); ZHAO, Rui, Shenzhen, Guangdong 518057 (CN); HAN, Lei, Shenzhen, Guangdong 518057 (CN)
(74) Representative: AWA Sweden AB
(86) International application number: PCT/CN2025/070705
(87) International publication number: WO 2025/148822

(57) **Abstract**

Disclosed in the present application are a training method for an action decision-making model of an intelligent agent, and an action decision-making method and apparatus. The training method comprises: constructing a state topology graph on the basis of historical trajectories; on the basis of the state topology graph, training an action feedback model of an intelligent agent, wherein the action feedback model is used for providing a feedback signal of an environment where the intelligent agent resides in respect of an action executed by the intelligent agent; on the basis of the state topology graph and the action feedback model, training an action value model of the intelligent agent, wherein the action value model is used for providing an estimated action value of the action executed by the intelligent agent, and the estimated action value indicates a metric value used for measuring the impact of the action executed by the intelligent agent on the environment; and on the basis of the action value model, training an action decision-making model of the intelligent agent, wherein the action decision-making model is used for deciding an action to be executed by the intelligent agent in a given state.

## Description

### RELATED APPLICATION

This application claims priority to Chinese Patent Application No. 202410039699.6, filed with the China National Intellectual Property Administration on January 9, 2024 and entitled "AGENT ACTION DECISION-MAKING MODEL TRAINING METHOD AND APPARATUS AND AGENT ACTION DECISION-MAKING METHOD AND APPARATUS", which is incorporated herein by reference in its entirety.

### FIELD OF THE TECHNOLOGY

The disclosure relates to the field of computer technologies, and in particular, to an agent action decision-making model training method and apparatus and an agent action decision-making method and apparatus.

### BACKGROUND OF THE DISCLOSURE

With the development of computer and robot technologies, agents represented by robots, mechanical arms, and large models have attracted wide attention. Currently, application of agents gradually expands to numerous industrial application scenarios such as robot control, videos, and games, and also relates to interaction scenarios and non-interaction scenarios between agents and humans.

### SUMMARY

Provided are an agent action decision-making model training method and apparatus and an agent action decision-making method and apparatus, which can train a more precise action decision-making model and improve performance of the action decision-making model, so as to determine a more precise action for an agent.

According to some embodiments, an agent action decision-making model training method, performed by a computer device, includes:
constructing a state topology graph based on a plurality of historical trajectories of an agent, the plurality of historical trajectories each comprising a plurality of actions for respectively controlling a state transition, the state topology graph containing a plurality of nodes each indicating a state and a plurality of directed edges each connecting a pair of the nodes and representing a respective action;
training an action feedback model of the agent based on the state topology graph, the action feedback model being configured to provide, for an action executed by the agent, an estimated feedback value representing a feedback signal generated by an environment of the agent;
training an action value model of the agent based on the state topology graph and the action feedback model, the action value model being configured to provide, for an action executed by the agent, an estimated action value measuring an impact of the action on the environment; and
training an action decision-making model of the agent based on the action value model, the action decision-making model being configured to determine a target action that is to be executed by the agent in a given state.

According to some embodiments, an agent action decision-making method, performed by a computer device, includes:
inputting a state observed by an agent in an environment at a current moment into an action decision-making model of the agent;
determining execution probabilities of the agent respectively for a plurality of candidate actions through the action decision-making model, the execution probabilities each representing a possibility that the agent executes a respective candidate action of the plurality of candidate actions in the state; and
determining, in the plurality of candidate actions based on the execution probabilities of the plurality of candidate actions, a target action to be executed by the agent at the current moment;
in which the action decision-making model is obtained by performing collaborative training based on a state topology graph, an action feedback model, and an action value model, the state topology graph containing a plurality of node each indicating a state and a plurality of directed edges each connecting a pair of the nodes and representing a respective action, the action feedback model is configured to provide, for an action executed by the agent, an estimated feedback value representing a feedback signal generated by the environment, and the action value model is configured to provide, for an action executed by the agent, an estimated action value measuring an impact of the action on the environment.

According to some embodiments, an agent action decision-making model training apparatus, includes:
a topology graph construction module, configured to construct a state topology graph based on a plurality of historical trajectories of an agent, the plurality of historical trajectories each comprising a plurality of actions for respectively controlling a state transition, the state topology graph containing a plurality of nodes each indicating a state and a plurality of directed edges each connecting a pair of the nodes and representing a respective action;
a feedback training module, configured to train an action feedback model of the agent based on the state topology graph, the action feedback model being configured to provide, for an action executed by the agent, an estimated feedback value representing a feedback signal generated by an environment of the agent;
an action value training module, configured to train an action value model of the agent based on the state topology graph and the action feedback model, the action value model being configured to provide, for an action executed by the agent, an estimated action value measuring an impact of the action on the environment; and
a decision-making training module, configured to train an action decision-making model of the agent based on the action value model, the action decision-making model being configured to determine a target action that is to be executed by the agent in a given state.

According to some embodiments, an agent action decision-making apparatus, includes:
an input module, configured to input a state observed by an agent in an environment at a current moment into an action decision-making model of the agent, the action decision-making model being configured to determine an action that is to be executed by the agent in a given state;
a probability determining module, configured to determine execution probabilities of the agent respectively for a plurality of candidate actions through the action decision-making model, the execution probabilities each representing a possibility that the agent executes a respective candidate action of the plurality of candidate actions in the state; and
an action determining module, configured to determine, in the plurality of candidate actions based on the execution probabilities of the plurality of candidate actions, a target action to be executed by the agent at the current moment;
in which the action decision-making model is obtained by performing collaborative training based on a state topology graph, an action feedback model, and an action value model, the state topology graph containing a plurality of node each indicating a state and a plurality of directed edges each connecting a pair of the nodes and representing a respective action, the action feedback model is configured to provide, for an action executed by the agent, an estimated feedback value representing a feedback signal generated by the environment, and the action value model is configured to provide, for an action executed by the agent, an estimated action value measuring an impact of the action on the environment.

According to some embodiments, a computer device includes one or more processors and one or more memories, the one or more memories storing at least one computer program, and the at least one computer program being loaded and executed by the one or more processors to implement the agent action decision-making model training method or the agent action decision-making method according to any one of the foregoing possible implementations.

According to some embodiments, a computer readable storage medium has at least one computer program stored therein, the at least one computer program being loaded and executed by a processor to implement the agent action decision-making model training method or the agent action decision-making method according to any one of the foregoing possible implementations.

According to some embodiments, a computer program product includes one or more computer programs, the one or more computer programs being stored in a computer-readable storage medium. One or more processors of a computer device can read the one or more computer programs from the computer readable storage medium, and the one or more processors execute the one or more computer programs, so that the computer device can perform the agent action decision-making model training method or the agent action decision-making method according to any one of the foregoing possible implementations.

### BRIEF DESCRIPTION OF THE DRAWINGS

FIG. 1 is a flowchart of a preference-based reinforcement learning algorithm according to some embodiments;
FIG. 2 is a schematic diagram of an implementation environment of an agent action decision-making model training method according to some embodiments;
FIG. 3 is a flowchart of an agent action decision-making model training method according to some embodiments;
FIG. 4 is a flowchart of an agent action decision-making model training method according to some embodiments;
FIG. 5 is a diagram of a training framework of an action decision-making model according to some embodiments;
FIG. 6 is a flowchart of an agent action decision-making method according to some embodiments;
FIG. 7 is a diagram of comparing performance in a box pushing task by an agent according to some embodiments;
FIG. 8 is a diagram of comparing performance of robots in a building task according to some embodiments;
FIG. 9 is a schematic structural diagram of an agent action decision-making model training apparatus according to some embodiments;
FIG. 10 is a schematic structural diagram of an agent action decision-making apparatus according to some embodiments;
FIG. 11 is a schematic structural diagram of a control terminal according to some embodiments; and
FIG. 12 is a schematic structural diagram of a training server according to some embodiments.

### DESCRIPTION OF EMBODIMENTS

To make the objectives, technical solutions, and advantages of the disclosure clearer, the following further describes implementations of the disclosure in detail with reference to the accompanying drawings.

The terms "first", "second", and the like in the disclosure are used for distinguishing between same items or similar items of which effects and functions are basically the same. The "first", "second", and "n^{th}" do not have a dependency relationship in logic or time sequence, and a quantity and an execution order thereof are not limited.

In the disclosure, the term "at least one" refers to one or more, and "multiple" refers to two or more. For example, multiple historical trajectories refer to two or more historical trajectories.

In the disclosure, the term "including at least one of A or B" refers to the following situations: including only A, including only B, and including both A and B.

When applied to a product or technology with a method in embodiments of the disclosure, user-related information (including but not limited to device information, personal information, and behavioral information of a user, and the like), data (including but not limited to data for analysis, stored data, displayed data, and the like), and signals in the disclosure are used under permission, consent, and authorization by users or full authorization by all parties. In addition, collection, use, and processing of related information, data, and signals need to comply with related laws, regulations, and standards in related countries and regions. For example, in the disclosure, an annotation result for a pair of trajectories or a pair of segments is obtained with sufficient authorization.

With the development of computer and robot technologies, agents represented by robots, mechanical arms, and/or large models have attracted wide attention. Application of agents gradually expands to numerous industrial application scenarios such as robot control, videos, and games. An action executed by an agent is determined by an action decision-making model. When performance of the action decision-making model is insufficient, the agent cannot execute an appropriate action, and eventually cannot complete a task. Therefore, how to train a more precise action decision-making model to improve performance of the action decision-making model is a problem that may be resolved urgently.

Solutions provided in some embodiments relate to machine learning technologies of artificial intelligence, and specifically relate to reinforcement learning (ML), which is also referred to as reward-based learning, evaluation learning, or enhancement learning and is one of machine learning paradigms and methodologies, and is configured to describe and resolve a problem that an agent achieves a maximum reward or achieves an objective based on a learning policy during interaction with an environment.

A classic model of reinforcement learning is a standard Markov decision process (MDP). According to a given condition, reinforcement learning may be classified into model-based reinforcement learning (Model-Based RL), model-free reinforcement learning (Model-Free RL), active reinforcement learning (Active RL), and passive reinforcement learning (Passive RL). Variants of reinforcement learning include inverse reinforcement learning, hierarchical reinforcement learning, and reinforcement learning in partially observable systems. Algorithms used to solve the reinforcement learning problem may be classified into two types: policy search algorithms and value function algorithms.

Inspired by behaviorism psychology, the reinforcement learning theory emphasizes online learning and strives to maintain a balance between exploration and exploitation. Different from supervised learning and unsupervised learning, reinforcement learning does not require any data to be given in advance, and instead obtains learning information by receiving a reward (feedback) from an environment for an action and updates a model parameter. The reinforcement learning issue is discussed in fields such as information theory, game theory, and automatic control, and is used for explaining an equilibrium state under condition of bounded rationality, and designing a recommendation system and a robot interaction system. Some complex reinforcement learning algorithms have general intelligence for solving complex problems to some extent, and can reach the human level in Go and electronic games.

In some task scenarios, a deep learning model may be used in reinforcement learning to form deep reinforcement learning (DRL). Deep reinforcement learning combines a perceptual capability of deep learning and a decision-making capability of reinforcement learning, to implement end-to-end learning from perception to action, and may directly control according to an inputted signal and is an artificial intelligence method closer to thinking of humans. Deep reinforcement learning has the potential of enabling a robot to completely and autonomously learn one or more skills.

Terms or concepts involved in the deep reinforcement learning technology are described below.

**Agent**: An agent is an intelligent entity, for example, a software/virtual or hardware/mechanical entity that can actively perform activities. Agent is a very important concept in the field of artificial intelligence. Any independent entity that can think and can interact with the environment can be abstracted as an agent. In the field of artificial intelligence, agent has also been translated as agent entity, intelligent entity, artificial entity, and the like. In other words, an agent is a computing entity that resides in an environment, can continuously function autonomously, and has features such as residency, reactivity, sociality, and initiative, and may be hardware (for example, a robot) or software. An agent may interpret data that is obtained from an environment and that reflects an event occurring in the environment, and execute an action that affects the environment.

**Environment**: An environment is a space or a scenario in which an agent resides. The environment may be an area in a real world, or may be a scenario in a virtual world.

**State:** A state is presented when an agent interacts with an environment at a moment. A state is a concept related to a timeline, and an agent may observe the same state or different states at different moments. For example, the agent observes a state s at a moment t, and the agent observes another state s' at a moment t+1.

**Action**: An action is a behavior or a movement that is executed by an agent and that can affect an environment. The agent affects the environment through an action, and the agent can usually execute one or more actions. For example, the agent is a robot. The agent may perform a plurality of actions such as walking, running, and jumping in the environment.

**Trajectory**: An action trajectory of an agent is a series of actions that are executed by the agent in a continuous time period and that are arranged in a time sequence. Usually, when executing a task, an agent continuously interacts with an environment from an action of an initial moment, and stops when the task is completed or the number of actions (e.g. referred to as trajectory length) reaches a specified length. A complete action sequence formed is referred to as a trajectory. For example, when collaboratively transporting goods, multiple robot vehicles start from a start point and stop when the goods is delivered or a walking step count reaches a preset step count. Within a time period from the start to the stop, an action sequence formed by continuous actions executed by each robot vehicle is referred to as a trajectory of the robot vehicle.

**Segment**: A segment is formed by some continuous actions extracted or cut from a trajectory of an agent, and the segment is a subset of the trajectory. Because a trajectory is usually relatively long, for ease of annotation, each trajectory is extracted or cut according to a sampling length, to obtain multiple segments having the same length (all being equal to the sampling length).

**Policy**: A policy is defined by a policy function and is usually presented by an action decision-making model, such as a policy neural network or another parameter model, and is used for making a decision to control an agent to move according to an observed state. For example, a policy function π is presented as a probability density function. If any state s is given, a probability that the agent performs any action in the given state s can be determined by using the policy function π. The probability represents a probability that the agent performs such an action.

**Reward**: After the agent performs an action, the environment may provide a reward to the agent. Usually, the reward is defined by a reward function, and the reward function is usually presented as an action feedback model, such as a reward neural network or another parameter model. An objective of reinforcement learning is that a sum of rewards obtained by a series of actions executed by an agent in a time period is as high as possible.

**State transition:** An agent transitions between different states in an environment by executing an action, and a process of transferring from an old state at a previous moment to a new state at a current moment is referred to as a state transition. For example, after the agent observes a state s at a moment t, the agent performs an action a in the environment, so as to transition from the state s to another state s' at a moment t+1. The state transition from the state s to the state s' may be abstracted into a conditional probability density function P. Given the state s and the action a at a current moment, a probability of transitioning to another state s' at a next moment can be predicted by using the conditional probability density function P.

**Agent environment interaction:** After observing a state at a current moment, the agent performs a corresponding action. After the agent performs the action, the environment is affected by the action and updated to a state at a next moment, to complete state transition from the current moment to the next moment. In addition, the environment further returns a feedback signal (or referred to as a reward signal) to the agent.

**Action value function**: The function is used for evaluating a value obtained by an agent by executing an action at a moment. The action value function Q is related to the policy function π. If the same agent uses different policy functions π, action value functions Q are different. For example, when the policy function π is unchanged, the action value function Q can reflect a degree of impact of execution of the action a by the agent in the state s at the current moment on the environment. The action value function is usually presented as an action value model, such as an action value neural network or another parameter model.

**Robot**: Robots include all machines (for example, a machine dog, a machine cat, and a machine car) that simulate human behaviors or thoughts and simulate other living creatures. Some computer programs are also referred to as robots (for example, chat robots and dialog robots). A robot in some embodiments refers to a man-made machine apparatus that can automatically execute a task, and is configured to replace or assist human work. The man-made machine apparatus may be in a humanoid form or an animal-like form, is usually an electro-mechanical device, and is controlled by a computer program or an electronic circuit. Generally, a robot includes a visual sensor, a mechanical arm, and a main control computer.

**Mechanical arm**: A mechanical arm is a high-precision, multi-input multi-output, highly nonlinear, and strong coupling complex system widely applied to the field of robotics. Because of unique operation flexibility, in addition to being coupled to the body of the robot, a mechanical arm may also be coupled to any other man-made machine apparatus.

In recent years, deep reinforcement learning technologies have made rapid progress. By means of deep reinforcement learning technologies, an agent can be capable of various complex tasks and skills, which cover robot control, videos, games, and numerous industrial applications. However, the key to success of deep reinforcement learning is a reward function carefully designed by a human engineer. In many actual application scenarios of reinforcement learning, formulating a proper reward function is always a challenging topic. Quality of the reward function depends on deep understanding of core logic of a problem and related background knowledge by a designer to a large extent. For example, it is difficult to formulate a reward function for a text generation task, and the key lies in how to measure text generation quality by using a single annotation value. Although human engineers make huge efforts on reward design, some researches still indicate that there are many problems in existing algorithms and application scenarios, for example, "reward hacking", which refers to that an agent adopts some behaviors that are not expected by human engineers and even are harmful, to obtain more rewards. In this scenario, the agent concentrates on using the defect of the reward function to obtain a maximum reward and ignores whether the behavior satisfies an expectation. This may result in an unexpected and risky behavior.

In view of this, a preference-based reinforcement learning (PbML) technology has attracted wide attention, and a series of algorithms have been generated. Compared with an algorithm that relies on a reward function designed by human engineers, the preference-based reinforcement learning technology uses human preferences to learn an action feedback model (for example, a rewarding neural network). Specifically, humans may provide a preference for a pair of action trajectories of an agent. For example, a pair of historical trajectories made by the agent is presented to a technician, and the technician annotates, from the pair of historical trajectories, a historical trajectory that satisfies the preference of humans, so as to implicitly indicate an objective of a behavior or a task that the agent may learn. The historical trajectory is an action trajectory made by the agent in a past time period, and each historical moment in the past time period has a unique and determined state and action. By learning from human feedback (for example, whether the trajectory satisfies a human preference), the agent can complete a task or master a behavior required by humans.

Some embodiments relate to an effective preference-based reinforcement learning algorithm. An action feedback model can be learned from human preferences without a human engineer to design a reward function, to facilitate training of an action decision-making model of an agent. A test shows that this algorithm can train an agent to present a novel behavior and alleviate the challenge from reward hacking to some extent.

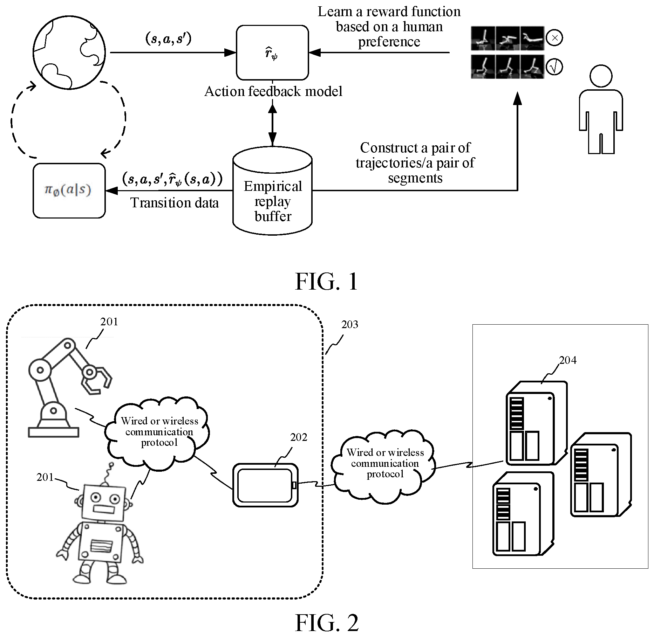

The following describes a framework of a preference-based reinforcement learning algorithm with reference to FIG. 1. FIG. 1 is a principle flowchart of a preference-based reinforcement learning algorithm according to some embodiments. As shown in FIG. 1, *π*_{Ø} represents an action decision-making model of an agent; and Ø is a parameter set of the action decision-making model. When a state s is observed, the action decision-making model *π*_{Ø} determines an action a that the agent may execute. The agent interacts with an environment after executing the action a, so that the environment is updated to another state s'. *r̂_{φ}* represents an action feedback model, and *φ* is a parameter set of the action feedback model. The action feedback model is configured to estimate a reward value that the environment feeds back to the agent when the action a is executed in the state s to enter the new state s'.

A quadruple (*s*, *a*, *s'*, *r̂_{φ}*(*s*, *a*)) is defined as transition data, and may indicate the state transition from the state s to the state s' and related information. The transition data is stored in an empirical replay buffer. In other words, the empirical replay buffer is configured to store a historical trajectory of the agent.

Based on the historical trajectory in the empirical replay buffer, different pairs of trajectories can be constructed in a manner such as random sampling or non-random sampling. Each pair of trajectories is presented to a technician, so that the technician selects a trajectory better satisfying the preference from the pair of trajectories, and a satisfying result or a non-satisfying result annotated by the technician is recorded. In this way, one positive sample trajectory and one negative sample trajectory can be generated in each pair of trajectories, so that an agent queries preferences of humans for these pair of trajectories.

Alternatively, when trajectories are generally relatively long, to improve query efficiency, different pairs of segments may be constructed from the historical trajectories in various manners such as extracting, cutting, or sampling. Each pair of segments is presented to a technician, so that the technician selects a segment better satisfying a preference from the pair of segments, and a satisfying result or a non-satisfying result annotated by the technician is recorded. In this way, one positive sample segment and one negative sample segment can be generated in each pair of segments, so that an agent queries preferences of humans for these pair of segments. For example, after a sampling length is set, each trajectory is cut into a series of segments whose lengths do not exceed the sampling length, and then a pair of segments whose pairing lengths are equal is randomly extracted from all the cut segments, so as to obtain several pairs of segments through sampling. A construction manner of the pair of segments is not limited herein.

To some extent, preference data (for example, an annotation result of each pair of trajectories or segments) obtained by querying in the foregoing manner can reflect human expectation for behavior of an agent. Based on the preference data, a potential reward function can be learned and recovered by using a supervised learning technology. The reward function can specify a reward value of selecting an action in a given state, so that feedback can be provided to the action value function to some extent, to obtain a more precise action value function. The action value function can assist in optimizing a policy function of the agent, so that the policy function can implement better and more proper decision on an action of the agent. By repeating the foregoing process, the agent can complete training of the policy function by using human preference data.

In other words, based on the preference data, an action feedback model with more precise estimation of a reward value can be obtained through training by using a supervised learning technology. A more precise reward value provided by the action feedback model indicates better performance of a related action value model, so that the action value model evaluates an action value more precisely, thereby guiding the action decision-making model of the agent in turn. Finally, the action decision-making model with better performance and more precise decision-making is obtained through optimization, and the action decision-making model is trained based on the preference data.

Because the preference-based reinforcement learning technology relies on preference data, for example, annotation results of pairs of trajectories or pairs of segments by a technician, and a large amount of preference data may manually annotated, the preference-based reinforcement learning technology requires high labor costs in many application scenarios, and usage efficiency of the preference data is low. In addition, when a pair of trajectories or a pair of segments is constructed, some historical trajectories are usually randomly extracted, and are then filtered and paired by using different sampling methods, to construct a random pair of trajectories to query for human preference. Therefore, preference query can be performed only by using an existing historical trajectory. Because of randomness of construction of a pair of trajectories, it is very possible that both trajectories in a pair of trajectories do not satisfy human preference, and query efficiency is very low.

In view of this, some embodiments relate to an agent action decision-making model training method, and provides an efficient preference-based reinforcement learning framework, which can make full use of preference data of a human or a human expert to perform precise empirical estimation on an action value. This helps learning of an action value function, for example, an action value model, which impacts an action feedback model and an action decision-making model, so that performance of an entire policy training process of an agent can be greatly improved.

Specifically, a non-parameterized statistical model, for example, a state topology graph, is constructed by using the historical trajectory stored in the empirical replay buffer. An empirical action value function can be obtained through learning by using the state topology graph. The empirical action value function can provide at least two advantages: First, based on trajectory sampling on the state topology graph, a pair of trajectories or a pair of segments having a larger amount of information can be constructed to help query human preference, thereby improving efficiency of constructing the pair of trajectories or the pair of segments, and improving efficiency of querying preference data. Second, learning of the action value model can be constrained, to optimize to obtain the action value model with better performance. That is, an action value function based on a neural network is regularized, so that estimation of an action value by the action value model is more precise, thereby further accelerating a policy learning process, relieving an over-estimation error and an extrapolation error during learning of the action value function, and improving training efficiency of the action decision-making model, thereby improving learning efficiency of the entire policy learning process.

Some embodiments are applicable to tasks including robot collaboration, mechanical arm control, and any task related to a human scenario, for example, a car collaboration scenario, an intelligent question-answer scenario, and a robot dancing scenario. For example, in a car collaboration scenario, with the development of modern industry and technologies, the demand of collaborative transport of goods by multiple robot vehicles is increasing. To ensure that these robot vehicles can effectively and efficiently collaborate, based on the preference-based reinforcement learning framework of some embodiments, an action decision-making model satisfying a human intention and preference can be trained for the robot vehicles.

The preference-based reinforcement learning framework in some embodiments can efficiently use human preference data. For example, in a car collaboration scenario, a robot vehicle can understand human preference more precisely, reducing the number of times of intervention and adjustment by a technician, reducing development costs, and improving utilization of preference data. In addition, human preference data can be efficiently queried. A non-parameterized state topology graph is constructed by using historical data, so that a more informative pair of trajectories or pair of segments can be constructed, thereby improving efficiency of constructing the pair of trajectories or the pair of segments, improving efficiency of querying preference data, and improving learning efficiency of each model. In addition, the action value model optimized by using the empirical action value function can estimate an action value of each action in an environment more precisely, for example, precision of the action value model is improved, thereby optimizing precision of the action feedback model and the action decision-making model. For example, in a car collaboration scenario, when multiple robot vehicles work together, the action decision-making model can provide a better policy recommendation for each robot vehicle, to control each robot vehicle to execute an action that better conforms to an expectation.

Still using the car collaboration scenario as an example, in a task of collaborative transport by multiple robot vehicles, the robot vehicles can satisfy human requirements and preferences more precisely based on the preference-based reinforcement learning framework in some embodiments. For example, when multiple robot vehicles need to collaboratively move goods of a shape and weight, the action decision-making model may provide an optimal moving, collaboration, and path planning policy for the robot vehicles based on previously collected preference data, to ensure safe, quick, and efficient movement of the goods.

Further, the preference-based reinforcement learning framework in some embodiments can further be combined with large models to promote each other. In other words, training of the action decision-making model can also be facilitated by using a large amount of data and a refined model. For example, the preference-based reinforcement learning framework in some embodiments and a large language model (LLM) can promote each other, and the preference-based reinforcement learning technology helps a fine tuning process in the large language model. Besides, when the large language model is used as a preference model to annotate trajectories, a capability of an agent in a complex control task can be further improved.

The following describes a system architecture in some embodiments.

FIG. 2 is a schematic diagram of an implementation environment of an agent action decision-making model training method according to some embodiments. Referring to FIG. 2, the implementation environment includes: an agent 201, an agent control system 202, an environment 203, and a training server 204.

The agent 201 is any entity having intelligence, for example, a software or hardware entity capable of autonomously performing activities. The agent 201 resides in the environment 203, can think independently and continuously function autonomously, and can execute one or more actions to interact with the environment 203. An action executed by the agent 201 may impact the environment 203, and under the impact by the action of the agent, the environment 203 may change a state, for example, complete state transition. The agent 201 may also be considered as a computing entity having features such as residency, reactivity, sociality, and initiative, and may be hardware (for example, a robot, a mechanical arm, or a robot vehicle) or software (for example, a question-answer robot, game AI, or chess AI).

The agent control system 202 is a system or an algorithm configured to control an action of the agent 201. The agent control system 202 includes at least an action decision-making model. The action decision-making model is configured to determine an action that is to be executed by the agent 201 in a given state. Because the agent 201 can execute a plurality of actions in a given state, the action decision-making model can determine an action executed at a current moment in the given state to obtain an optimal feedback signal. Therefore, precision and intelligence of the action of the agent 201, and even whether the agent 201 can complete a given task depends on precision of the action decision-making model. In addition to the action decision-making model, the agent control system 202 may further be loaded with other functional modules such as an operating system, a voice interaction module, a graphic interaction module, a path planning module, and an agent navigation module, to control the agent 201 to implement richer and diversified interaction or presentation functions. This is not specifically limited in some embodiments.

In some embodiments, the agent control system 202 is a control module built into the agent 201. That is, the agent 201 and the agent control system 202 are coupled into the same entity. Alternatively, the agent control system 202 and the agent 201 are two independent entities. For example, the agent control system 202 is an independent control terminal. The control terminal may encapsulate a determined action as a control signal and send the control signal to the agent 201, to remotely control the agent 201 to perform the action based on the control signal. In this case, at least a signal receiver may be installed on the agent 201. Whether the agent 201 and the agent control system 202 are integrated into the same physical entity is not specifically limited in some embodiments.

The environment 203 is a space or a scenario in which the agent 201 resides. The environment 203 may be an area in a real world, or may be a scenario in a virtual world. For example, if the agent 201 is a robot, the environment 203 may be an action area in a three-dimensional space when the robot executes a task. For another example, if the agent 201 is game AI, the environment 203 is a virtual game scenario in which the game AI performs activities during battling.

Controlled by the agent control system 202, the agent 201 can interact with the environment 203. For example, after the agent 201 observes a state at a current moment, the agent control system 202 invokes the action decision-making model to determine a to-be-executed target action from multiple candidate actions, and controls the agent 201 to execute the target action. After the agent 201 executes the target action, the environment 203 is updated to a state at a next moment under the impact by the target action, to complete state transition from the current moment to the next moment. In addition, the environment 203 further returns a feedback signal (or referred to as a reward signal) to the agent 201.

The training server 204 is a computer device configured to train the action decision-making model of the agent. According to the agent action decision-making model training method in some embodiments, in a preference-based reinforcement learning framework, the training server 204 can fully learn and understand human preference data based on a constructed state topology graph, and finally obtain an action decision-making model with better precision and performance under supervision of the preference data through training, so that the action decision-making model can determine, for the agent, an action that better satisfies a human intention or expectation, thereby improving satisfaction of humans for the action of the agent. A training process of the action decision-making model may be completed locally, for example, the training server 204 performs offline training locally, or may be completed in cloud, for example, multiple servers jointly perform distributed training to accelerate training efficiency. This is not specifically limited in some embodiments.

The agent 201, the agent control system 202, the environment 203, and the training server 204 can be directly or indirectly connected to each other in a wired or wireless communication protocol. This is not limited in the disclosure herein.

The agent 201 may be a man-made machine apparatus such as a robot, a mechanical arm, a robot vehicle, a drone, or an unmanned vehicle, or may be an intelligent terminal such as a smartphone, a tablet computer, a notebook computer, a desktop computer, a smart speaker, or a smartwatch, but is not limited thereto.

The agent control system 202 may be a control module integrated into the agent 201, or may be a control terminal independent of the agent 201. The control terminal includes, but is not limited to, a smartphone, a tablet computer, a notebook computer, a desktop computer, a smart speaker, a smartwatch, and the like.

The environment 203 may be an area in the real world, for example, an action area of a man-made machine apparatus, or may be a virtual world, a virtual scenario, a virtual environment, an emulation environment, or the like provided by a computer device (for example, a game server, an emulation device, or an electronic device). This is not specifically limited in some embodiments.

The training server 204 may be an independent physical server, a server cluster composed of multiple physical servers or a distributed system, or a cloud server that provides cloud computing services such as a cloud service, a cloud database, cloud computing, a cloud function, cloud storage, a network service, cloud communication, a middleware service, a domain name service, a security service, a content delivery network (CDN), a big data platform, and an artificial intelligence platform.

For ease of understanding, interaction between an agent and an environment is described below by using an example of a scenario in which multiple robot vehicles collaboratively transport. In a car collaboration scenario, the agent refers to multiple robot vehicles, the agent control system refers to an action decision-making model of the robot vehicle, and may be integrated on a control chip of the robot vehicle, or may be an independent control terminal, and the environment refers to an action space or an action area when the robot vehicle transports goods.

According to the agent action decision-making model training method in some embodiments, in a preference-based reinforcement learning framework, the training server can obtain an action decision-making model with better precision and performance through training. A training process may be completed locally, for example, the training server performs offline training locally, or may be completed in cloud, for example, multiple servers jointly perform distributed training to accelerate training efficiency. This is not specifically limited in some embodiments.

In some embodiments, after training is completed, the training server delivers a parameter set of the action decision-making model to each robot vehicle, so that each robot vehicle determines an action and executes the action under control by a built-in action decision-making model. Multiple robot vehicles collaborate to move goods from a start point to an end point to complete a goods transport task.

In some other embodiments, after training is completed, the training server delivers a parameter set of the action decision-making model to a master control terminal of the robot vehicles. The master control terminal is responsible for scheduling an action of each robot vehicle. Therefore, under control by the action decision-making model, the master control terminal may determine an action of each robot vehicle and deliver a control signal of each determined action to a corresponding robot vehicle, to implement macro scheduling of multiple robot vehicles by the same master control terminal. The multiple robot vehicles are controlled to collaboratively move goods from a start point to an end point to complete a goods transport task. This is not specifically limited in some embodiments.

The following describes a basic process of an agent action decision-making model training method according to some embodiments.

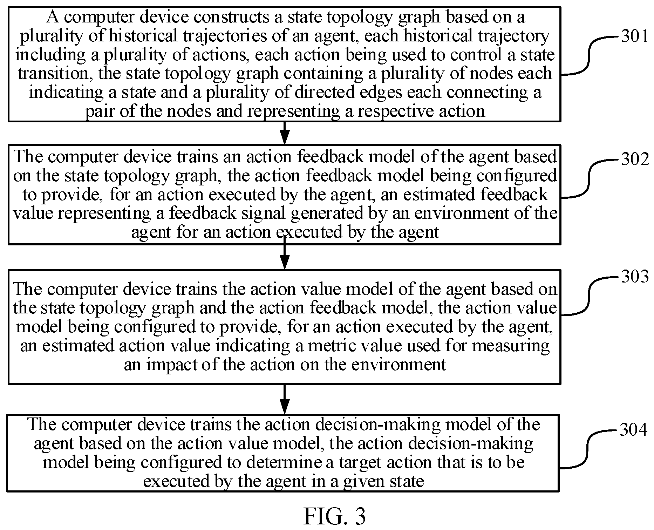

FIG. 3 is a flowchart of an agent action decision-making model training method according to some embodiments. Referring to FIG. 3, this embodiment is performed by a computer device. The computer device may be the training server 204 in the foregoing implementation environment, or may be another device configured to train an action decision-making model. This embodiment includes the following operations:
**301: A computer device constructs a state topology graph based on a plurality of historical trajectories of an agent, each historical trajectory including a plurality of actions, each action being used to control a state transition, the state topology graph containing a plurality of nodes each indicating a state and a plurality of directed edges each connecting a pair of the nodes and representing a respective action**.

The historical trajectory in some embodiments refers to a series of actions that are executed by the agent in a past continuous time period and that are arranged in a time sequence. When executing a task in a past continuous time period, the agent continuously interacts with an environment from an action of an initial moment, and stops when the task is completed or a number of actions reaches a specified length. A complete action sequence formed is referred to as a historical trajectory.

For example, when collaboratively transporting goods, multiple robot vehicles start from a start point and stops when the goods is delivered or a walking step count reaches a preset step count. Within a time period from the start to the stop, an action sequence formed by continuous actions executed by each robot vehicle is referred to as a historical trajectory of the robot vehicle.

For another example, when game AI executes a game challenge task, the game AI keeps performing action interaction with a game program during battling from a start moment, until challenge fails when an action step count reaches a preset step count, or challenge succeeds within the preset step count. In a time period from the start to the success of challenge or the failure of challenge, an action sequence formed by continuous actions executed by the game AI is referred to as a historical trajectory of the game AI.

Any historical trajectory includes a plurality of actions performed by the agent within the past time period, and each action is used for controlling transition from a state at a moment to a state at a next moment. Therefore, the historical trajectory may also be referred to as a historical action sequence of the agent.

The state topology graph in some embodiments refers to graph structure data using states as nodes, and can represent states and a topological relationship of transition between different states. The graph structure data is defined by a node set and a directed edge set. The node set refers to a set formed by all nodes in the state topology graph, each node indicates a state, the directed edge set refers to a set formed by all directed edges in the state topology graph, and each directed edge indicates an action.

Because state transition has a sequence in a timeline, an edge connecting two nodes has a direction (for example, a directed edge), and each directed edge connects a pair of nodes. Because of directionality (or directedness), a pair of nodes connected by a directed edge may be divided into an initial node and an arrival node. The initial node refers to a node starting from the directed edge, and the arrival node refers to a node to which the directed edge finally arrives or points. From the perspective of a state, a directed edge indicates an action, and the action causes a state transition process between two different states. Distinguished in a timeline, a state with an earlier time stamp is an initial state, and a state with a later time stamp is an arrival state. Therefore, an initial node of the directed edge indicates the initial state, and an arrival node of the directed edge indicates the arrival state.

The state topology graph may be stored in a computer device in one or more data structures, such as a hash table, an array, a dictionary, a key-value pair, and a queue. The data structure of the state topology graph is not specifically limited herein.

In some embodiments, for an agent of a given type, the computer device captures multiple historical trajectories of the agent. The historical trajectories may belong to the same or different previous time periods. For example, for a robot vehicle, historical trajectories of transporting goods by different robot vehicles within a previous 1 hour may be captured. For another example, for game AI, historical trajectories of the game AI of the same role in multiple previous historical battles may be captured.

When capturing historical trajectories, the historical trajectories may be randomly extracted from massive historical trajectories, to ensure randomness of the historical trajectories. Alternatively, a trajectory length interval may be preset, and multiple historical trajectories are randomly extracted from a trajectory set formed by historical trajectories conforming to the trajectory length interval, so that the historical trajectories are not excessively long or excessively short. Therefore, some trajectory samples of low quality are removed based on the trajectory length interval. Alternatively, simulation software may be used to simulate multiple historical trajectories, which reduces capturing costs and improves capturing efficiency. A manner of capturing the historical trajectories is not specifically limited in some embodiments.

In some embodiments, after the capturing of the multiple historical trajectories is completed, all observed states and all executed actions in the construction stage may be obtained according to the multiple historical trajectories, so that nodes of the state topology graph can be constructed according to the observed states, and directed edges of the state topology graph can be constructed according to the executed actions, to finally construct a state topology graph. That is, the node set of the state topology graph reflects all observed states, and the directed edge set reflects all executed actions.

In operation 301, a non-parameterized state topology graph is constructed based on the historical trajectories. The state topology graph can fully reflect empirical distribution of actions of the agent and is more informative. Information utilization of the historical trajectories is higher, and construction efficiency of the state topology graph is high. In addition, the state topology graph also supports very convenient dynamic updating. For example, once a new state is observed, only a new node may be added to the node set of the state topology graph. For another example, once it is observed that a new action causes a state transition that has not occurred before, only a new directed edge may be added to the directed edge set of the state topology graph.

**302: The computer device trains an action feedback model of the agent based on the state topology graph, the action feedback model being configured to provide, for an action executed by the agent, an estimated feedback value representing a feedback signal generated by an environment of the agent.**

Because the agent resides in the environment and interacts with the environment through an action, the action feedback model in some embodiments is configured to calculate or estimate a feedback signal generated by the environment for an action of the agent. Usually, after the agent performs an action in a state, a feedback signal is generated through the action feedback model. The feedback signal may be implemented as an estimated feedback value, for example, a state and an action are inputted to the action feedback model, and an estimated feedback value is outputted. The estimated feedback value represents a rewarding degree of the environment for the action. A larger estimated feedback value indicates a higher rewarding degree, and a smaller estimated feedback value indicates a lower rewarding degree (even there may be no response or there is a penalty). Therefore, the action feedback model is also referred to as a reward model, and the feedback signal is also referred to as a reward signal. The action feedback model embodies a reward function of reinforcement learning, and the action feedback model may be a reward neural network or another parameter model.

In some embodiments, based on the state topology graph constructed in operation 301, random sampling or non-random sampling may be performed from the state topology graph, to obtain multiple pairs of sampling trajectories. Each pair of sampling trajectories includes a pair of sampling trajectories having the same length. For ease of data storage, it may be required that all pairs of sampling trajectories have the same length. For example, sampling trajectories in all pairs of sampling trajectories are controlled to have the same length, for example, the length of all sampling trajectories is 10, to improve sampling trajectory access efficiency. Alternatively, it may be only required that lengths of two sampling trajectories in each pair of sampling trajectories are the same, but it is not required that lengths of all pairs of sampling trajectories are the same. For example, lengths of two sampling trajectories in one pair of sampling trajectories are both 10, but lengths of two sampling trajectories in another pair of sampling trajectories are both 15. This is not specifically limited in some embodiments. Next, the multiple pairs of sampling trajectories may be directly presented to a technician for annotation, and annotation results of the multiple pairs of sampling trajectories are collected. The annotation results are used for indicating preference levels of different sampling trajectories in each pair of sampling trajectories relative to a task executed by the agent. In other words, the sampling trajectories are presented in pairs to a technician for annotation. The technician may annotate, in each pair of sampling trajectories, a sampling trajectory that better satisfies a preference (or expectation). In this way, each pair of sampling trajectories is divided into a positive sample trajectory and a negative sample trajectory. The positive sample trajectory indicates a sampling trajectory whose annotation result is that a preference is satisfied, and the negative sample trajectory indicates a sampling trajectory whose annotation result is that a preference is not satisfied. Therefore, the annotation result reflects human preference levels for two sampling trajectories in each pair of sampling trajectories, and may also be referred to as human preference data of the sampling trajectories. Such a manner of collecting preference data based on a pair of trajectories has a simple process, few annotations, and high collection efficiency.

In some other embodiments, based on the state topology graph constructed in operation 301, random sampling or non-random sampling may be performed from the state topology graph, to obtain multiple sampling trajectories. However, trajectory pairing does not need to be performed according to whether lengths are the same. Instead, each sampling trajectory is first cut into multiple sampling segments through extracting, cutting, and the like, and then segment pairing is performed according to whether lengths are the same from all sampling segments obtained after sampling trajectories are cut, to obtain multiple pairs of sampling segments. Each pair of sampling segments includes a pair of sampling segments having the same length. For ease of data storage, it may be required that all pairs of sampling segments have the same length. For example, sampling segments in all pairs of sampling segments are controlled to have the same length, for example, the length of all sampling segments is 5, to improve sampling segment access efficiency. Alternatively, it may be only required that lengths of two sampling segments in each pair of sampling segments are the same, but it is not required that lengths of all pairs of sampling segments are the same. For example, lengths of two sampling segments in one pair of sampling segments are both 3, but lengths of two sampling segments in another pair of sampling segments are both 5. This is not specifically limited in some embodiments. Next, the multiple pairs of sampling segments may be directly presented to a technician for annotation, and annotation results of the multiple pairs of sampling segments are collected. The annotation results are used for indicating preference levels of different sampling segments in each pair of sampling segments relative to a task executed by the agent. In other words, the sampling segments are presented in pairs to a technician for annotation. The technician may annotate, in each pair of sampling segments, a sampling segment that better satisfies a preference (or expectation). In this way, each pair of sampling segments is divided into a positive sample segment and a negative sample segment. The positive sample segment indicates a sampling segment whose annotation result is that a preference is satisfied, and the negative sample segment indicates a sampling segment whose annotation result is that a preference is not satisfied. Therefore, the annotation result reflects human preference levels for two sampling segments in each pair of sampling segments, and may also be referred to as human preference data of the sampling segments. Such a manner of collecting preference data based on a pair of segments has higher data utilization of sampling trajectories, can generate richer sample data, and can obtain more informative preference data.

Further, after the annotation result, for example, the preference data, is collected, the preference data may be used to guide a training process of the action feedback model. Because the preference data can reflect an expectation of a human on a behavior of an agent, supervised learning is performed on the action feedback model by using the preference data as a supervision signal, so that the action feedback model can learn and recover a potential reward function, and the action feedback model can calculate a more precise estimated feedback value, thereby improving precision of the action feedback model.

**303: The computer device trains the action value model of the agent based on the state topology graph and the action feedback model, the action value model being configured to provide, for an action executed by the agent, an estimated action value measuring an impact of the action on the environment.**

The action value model in some embodiments is configured to evaluate a value of impact of an action executed by an agent on an environment. An evaluation result can measure a degree of impact of the action on task completion. A measurement indication of the evaluation result is referred to as an action value. An action value calculated based on the action value model is actually prediction or estimation performed by the action value model on a real action value, and is therefore referred to as an estimated action value. For example, for a given state and an executed action, the state and the action are inputted into the action value model, and an estimated action value is outputted. The estimated action value represents whether executing the corresponding action in the given state helps the agent complete the task. A larger estimated action value indicates a higher value of executing the corresponding action, and great help in completing the task. A smaller estimated action value indicates a smaller value of executing the corresponding action, and little help in completing the task. The action value model embodies an action value function of reinforcement learning, and the action value model may be an action value neural network or another parameter model.

In some embodiments, the state topology graph constructed in operation 301 can reflect empirical distribution of actions in historical trajectories, so as to guide training of the action value model from the perspective of empirical statistics. The action feedback model trained in operation 302 guides training of the action value model from the perspective of a feedback signal of an environment for an action (a larger reward of the environment for the action indicates a higher corresponding action value). Therefore, with reference to the state topology graph and the action feedback model, a training process of the action value model can be constrained, to obtain an action value model with better precision and performance, so that the action value model calculates the estimated action value more precisely. In addition, a human intention or preference is satisfied to some extent.

**304: The computer device trains the action decision-making model of the agent based on the action value model, the action decision-making model being configured to determine a target action that is to be executed by the agent in a given state.**

The action decision-making model in some embodiments is configured to determine an action that is to be executed by an agent in a given state, so as to help the agent complete action decision, thereby controlling the agent to execute an action when a proper path is planned. For example, an observed state is given, the state is inputted to the action decision-making model, and execution probabilities of multiple candidate actions are outputted, so that a target action that may be finally executed can be selected from the multiple candidate actions. A value of the execution probability of each candidate action indicates a possibility that the agent executes the corresponding candidate action. A larger execution probability indicates a larger possibility that the agent executes the corresponding candidate action, and a smaller execution probability indicates a smaller possibility that the agent executes the corresponding candidate action. In some embodiments, a candidate action having a largest execution probability may be selected as the target action, or a candidate action may be randomly selected as the target action from the first N candidate actions having largest execution probabilities, or sampling may be performed based on probability distribution of the candidate actions according to the execution probabilities, to determine the target action through sampling, so that a sampling process conforms to the probability distribution. This is not specifically limited in some embodiments. The action decision-making model embodies a policy function of reinforcement learning, and the action decision-making model may be a policy neural network or another parameter model.

In some embodiments, the action value model trained in operation 303 can provide an estimated action value of each action in a given state, and when parameters of the action decision-making model are different, different target actions may be determined in the same state. Therefore, the estimated action value determined by the action value model for the target action determined by the action decision-making model can reflect precision of parameters of the action decision-making model. Therefore, the action value model can assist in completing training optimization of the action decision-making model. Because the action value model with better performance has been obtained in operation 303, a finally optimized action decision-making model also has better precision and performance.

In some other embodiments, the action value model and the action decision-making model are trained and optimized in coordination. That is, in each iteration process of iterative training, the action value model and the action decision-making model are updated once according to the state topology graph and the action feedback model. An optimization order of the action value model and the action decision-making model is not limited. The action value model may be updated first and then the action decision-making model is updated, or the action decision-making model may be updated first and then the action value model is updated, or the action value model and the action decision-making model may be updated simultaneously. This is not specifically limited herein. The foregoing optimization process is iteratively performed until the action decision-making model satisfies a decision optimization stop condition. In this case, the trained action decision-making model is obtained. The decision optimization stop condition may be that a loss function value tends to converge, an iteration step count reaches a specified step count, or the like. The decision optimization stop condition is not specifically limited herein. In a coordinated training optimization process, the action value model and the action decision-making model are updated once in each iteration. In this way, the action value model and the action decision-making model can guide each other, thereby further improving precision of the action decision-making model finally obtained after optimization.

All of the foregoing technical solutions can be combined in any manner to form the embodiments of the present disclosure. Details are not described herein.

In the foregoing embodiment, a process of the agent action decision-making model training method is described. That is, a state topology graph with a larger amount of information is constructed, so that a more precise action feedback model is obtained through training, a more precise action value model is obtained through training, and finally a more precise action decision-making model is obtained through training. In some embodiments, a detailed process of the agent action decision-making model training method is described.

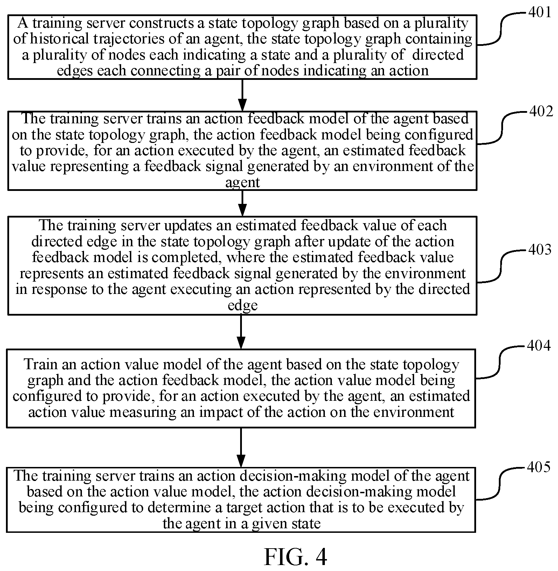

FIG. 4 is a flowchart of an agent action decision-making model training method according to some embodiments. Referring to FIG. 4, this embodiment is performed by a computer device. The computer device may be the training server 204 in the foregoing implementation environment, or may be another device configured to train an action decision-making model. For example, the computer device is a training server, and this embodiment includes the following operations:
**401: A training server constructs a state topology graph based on a plurality of historical trajectories of an agent, the state topology graph containing a plurality of nodes each indicating a state and a plurality of** d**irected edges each connecting a pair of nodes indicating an action.**

In some embodiments, the training server first initializes an action decision-making model for an agent of a given type, controls, based on the initialized action decision-making model, the agent to interact with an environment, collects multiple candidate historical trajectories of the agent, and screens the multiple candidate historical trajectories to obtain multiple historical trajectories. Each historical trajectory includes a plurality of actions, and each action is used to control transition between different states. The historical trajectories may belong to the same or different previous time periods. For example, for a robot vehicle, historical trajectories of transporting goods by different robot vehicles within a previous 1 hour may be captured. For another example, for game AI, historical trajectories of the game AI of the same role in multiple previous historical battles may be captured.

When selecting historical trajectories from the candidate historical trajectories, the historical trajectories may be randomly extracted from massive candidate historical trajectories, to ensure randomness of the historical trajectories. Alternatively, a trajectory length interval may be preset, and multiple historical trajectories are randomly extracted from a trajectory set formed by candidate historical trajectories conforming to the trajectory length interval, so that the historical trajectories are not excessively long or excessively short. Therefore, some candidate historical trajectories of low quality are removed based on the trajectory length interval.

In some other embodiments, simulation computing is performed on interaction between the agent and the environment in simulation software based on the initialized action decision-making model, to obtain multiple historical trajectories through simulation computing, which reduces capturing costs of historical trajectories and improves capturing efficiency of historical trajectories. A manner of capturing the historical trajectories is not specifically limited in some embodiments.

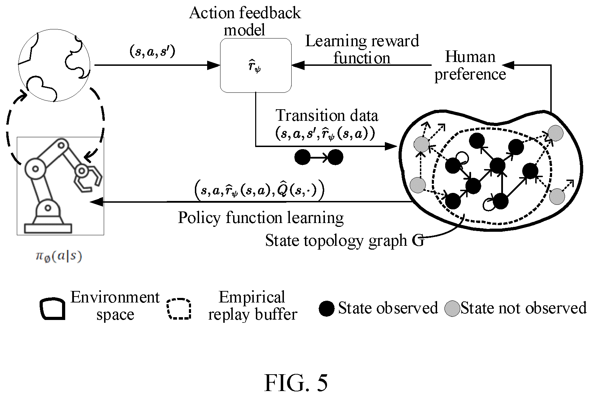

In an exemplary scenario, an example shown in FIG. 5 is used. FIG. 5 is a diagram of a training framework of an action decision-making model according to some embodiments. As shown in FIG. 5, for example, an action decision-making model is a policy neural network *r*_{Ø}, an action feedback model is a reward neural network *r̂_{φ}*, and an action value model is an action value neural network *Q_{θ}*. The policy neural network *r*_{Ø}, the reward neural network *r̂_{φ}*, and the action value neural network *Q_{θ}* are initialized when an algorithm starts. Then, based on the reward neural network *r̂_{φ}*and the action value neural network *Q_{θ}*, interaction between an agent and an environment is controlled by the policy neural network *π*_{Ø}. Multiple historical trajectories are obtained in any one of the foregoing collection manners. In some embodiments, when obtaining the historical trajectories, not only a series of actions executed by the agent are obtained, but also a series of states brought by the actions are recorded. Besides, an estimated feedback value is calculated for each state transition based on the reward neural network *r̂_{φ}*. When the state topology graph is constructed, the collected data is stored in the constructed state topology graph, so that an amount of information included in the state topology graph can be further increased.

In some embodiments, after obtaining the multiple historical trajectories, all observed states and all executed actions in the construction stage may be obtained according to the multiple historical trajectories, so that nodes of the state topology graph can be constructed according to the observed states, and directed edges of the state topology graph can be constructed according to the executed actions, to finally construct a state topology graph. That is, the node set of the state topology graph reflects all observed states, and the directed edge set reflects all executed actions. Exemplarily, the multiple historical trajectories are stored in an empirical replay buffer of the training server. A dynamic and directed state topology graph is constructed based on the historical trajectories in the empirical replay buffer.

A possible manner of constructing the state topology graph is described below by using an example. This construction manner includes operations A1 to A3:
**A1: The training server obtains an initialized state topology graph.**

In some embodiments, at a stage of constructing the state topology graph, the initialized state topology graph is first obtained. In some examples, both a node set and a directed edge set of the initialized state topology graph are empty sets. For example, the state topology graph G is represented as G = (V, E), and both the node set V and the directed edge set E are empty sets.

In an exemplary scenario, the node set V is defined as *V =* {*s*|(*s*, *Q̂*(*s*))}, and the directed edge set E is defined as *E =* {*s* → *s'*| (*a*, *r̂_{φ}*(*s*, *a*), *N(s, a*, *s'), Q̂*(*s*, *a*))}.

Because a node in the node set V indicates a state s, related information about the state s indicated by each node may be recorded in the node set. In some examples, the node set V is implemented as an array object, and each node in the array object records at least a node number, a state s indicated by the node, and an empirical action value *Q̂*(*s*)*.* The empirical action value *Q(s)* is described in detail below in operation B4.

Because a directed edge in the directed edge set E indicates an action a, execution of the action a by the agent causes a state transition process from the state s to another state s'. That is, each directed edge indicates a transition from the state s to another state s' through the action a. Therefore, related information of each action a and a state transition process indicated by the action may be recorded in the directed edge set. In some examples, the directed edge set is implemented as a dictionary object, and each directed edge in the dictionary object records at least an action a, an estimated feedback value *r̂_{φ}*(*s*, *a*), a number of access times *N*(*s, a, s'*), and an empirical action value *Q̂*(*s*, *a*) associated with the directed edge. Both the estimated feedback value *r̂_{φ}*(*s*, *a*) and the empirical action value *Q̂*(*s, a*) are both described in detail in operation B4. The number of access times *N*(*s*, *a*, *s'*) indicates a query frequency of the directed edge in a training stage. An estimated feedback value of each directed edge is provided by the action feedback model. Therefore, each time the parameter set of the action feedback model is updated once, estimated feedback values of all directed edges in the directed edge set are also updated accordingly. For a detailed process, refer to operation 403 below. In addition, a number of access times of each directed edge is dynamically updated in real time in a training stage as a query frequency increases. For a detailed process, refer to operation A2 below. In addition, an empirical action value of each directed edge is also updated when the action value update condition is satisfied. For a detailed process, refer to operation B4 below.

In some embodiments, for each node in the node set V, a unique state hash value for a state s indicated by the node is generated by using a hash function. Similarly, for each directed edge in the directed edge set E, a unique action hash value for an action a indicated by the directed edge is also generated by using a hash function. In this way, a key-value pair data structure can be generated for ease of access and query. Using an action indicated by a directed edge as an example, a corresponding key may be an action hash value, and a corresponding value may be a state hash value of an arrival state of the action. In this way, it can be ensured that time complexity of a query process is 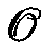 (1), thereby improving efficiency of querying the state topology graph.

For each node in the node set V, a support action set *∂A*(*s*) may further be maintained. The support action set indicates all actions that have been executed by the agent in a state s, and functions to help update information of the state topology graph. Detailed description is provided below in operation B4.

**A2: The training server queries, for any action in any historical trajectory, the initialized state topology graph for a directed edge indicating/representing the action.**

In some embodiments, when multiple historical trajectories are used to construct the state topology graph, manners of constructing nodes and directed edges in the state topology graph are similar for the historical trajectories. Therefore, only one of the multiple historical trajectories is used as an example for description. Because the historical trajectory includes multiple actions that guide state transition according to a time sequence, for any action in the historical trajectory, the directed edge set of the state topology graph is queried to determine whether a directed edge indicating the action exists. If the directed edge indicating the action is found, the operation in operation A3 is performed. If no directed edge indicating the action is found, an operation in operation A4 below is performed.

**A3: Update, in response to that the training server finds the directed edge representing the action, a number of access times associated with the directed edge, where the number of access times indicates a query frequency of the directed edge.**

In operation A3, for any action a in the historical trajectory, if a directed edge indicating the action is found in the directed edge set, it indicates that the directed edge has existed. Therefore, no new node may be added, and no new directed edge may be added. Only the number of access times *N*(*s*, *a*, *s'*) recorded on the directed edge may be updated. In some examples, the number of access times *N*(*s*, *a*, *s'*) is increased by 1, for example, a value obtained by increasing an original value of the number of access times *N(s, a, s')* by 1 is assigned to the number of access times *N*(*s*, *a*, *s'*), for example, *N*(*s*, *a*, *s'*) ← *N*(*s*, *a*, *s'*)+1.

**A4: Determine, in response to that the training server fails to find the directed edge representing the action, an initial state and an arrival state associated with the action, and query the initialized state topology graph for an initial node representing the initial state and an arrival node representing the arrival state; add, if the initial node representing the initial state is not found, a new initial node representing the initial state to the initialized state topology graph; add, if the arrival node representing the arrival state is not found, a new arrival node representing the arrival state to the initialized state topology graph; and add a new directed edge pointing from the initial node to the arrival node to the initialized state topology graph.**

In this operation A4, for any action a in the historical trajectory, if no directed edge indicating the action is found in the directed edge set, it indicates that no directed edge indicating the action exists in the state topology graph, and indicates that a case of executing the action from an initial state is not observed in the empirical replay buffer. Therefore, after an initial state and an arrival state of the action are determined, the node set of the state topology graph is further queried for an initial node indicating the initial state and an arrival node indicating the arrival state. If the initial node indicated by the initial state is not found, an initial node indicating the initial state may be newly added to the node set. If the arrival node indicated by the arrival state is not found, an arrival node indicating the arrival state may be newly added to the node set. Besides, a directed edge pointing from the initial node to the arrival node is newly added to the directed edge set.

In an exemplary scenario, a quadruple (*s*, *a*, *s'*, *r̂_{φ}*(*s*, *a*)) is defined as transition data, and may indicate state transition from the initial state s to the arrival state s' and related information thereof. The transition data is stored in the empirical replay buffer. When new transition data (*s, a*, *s'*, *r̂_{φ}(s, a*)) is observed, for a corresponding newly added node, an empirical action value thereof may be initialized as *Q̂*(*s*)*=* 0. For a corresponding newly added directed edge, an empirical action value thereof may be initialized as *Q̂*(*s, a*)= 0, and a number of access times thereof may be initialized as *N*(*s, a*, *s'*)= 1.

In operations A1 to A4, the node set and the directed edge set of the state topology graph can be continuously filled by iteratively traversing each action in each historical trajectory. After all actions in all historical trajectories are traversed, a completely constructed state topology graph is obtained. In some other embodiments, all nodes may be constructed at a time according to a full set of states in the historical trajectories, and then all directed edges are constructed according to a full set of actions in the historical trajectories. A manner of constructing the state topology graph is not specifically limited in some embodiments.

In operation 401, a non-parameterized state topology graph is constructed based on the historical trajectories. The state topology graph can fully reflect empirical distribution of actions of the agent and is more informative. Information utilization of the historical trajectories is higher, and construction efficiency of the state topology graph is higher. In addition, the state topology graph also supports very convenient dynamic updating. For example, once a new state is observed, only a new node may be added to the node set of the state topology graph. For another example, once it is observed that a new action causes a state transition that has not occurred before, only a new directed edge may be added to the directed edge set of the state topology graph. Alternatively, if a recorded state transition reoccurs, only a number of access times recorded on a directed edge may be updated. In this way, with continuous accumulation of historical trajectories, the state topology graph becomes better, thereby implementing adaptive update of the state topology graph.

**402: The training server trains an action feedback model of the agent based on the state topology graph, the action feedback model being configured to provide, for an action executed by the agent, an estimated feedback value representing a feedback signal generated by an environment of the agent.**

In some embodiments, based on the state topology graph constructed in operation 401, multiple pairs of sampling trajectories may be exported from the state topology graph and presented to a technician for preference annotation, to obtain annotation results of all pairs of sampling trajectories. The annotation results of all the pairs of sampling trajectories are collectively referred to as preference data. In some other embodiments, because it is relatively laborious for a technician to annotate each pair of sampling trajectory, each pair of sampling trajectory may be inputted into a large model, and the large model outputs an annotation result of each pair of sampling trajectory. The annotation result provided by the large model can also reflect a preference tendency to some extent. Therefore, the annotation result of each pair of sampling trajectory is also referred to as preference data. Whether the annotation result is annotated by a technician or a large model is not specifically limited in some embodiments.

Further, after the annotation result, for example, the preference data, is collected, the preference data may be used to guide a training process of the action feedback model. Because the preference data can reflect an expectation of a human (or a large model) on a behavior of an agent, iterative training may be performed on the action feedback model in a supervised learning manner by using the preference data as a supervision signal, to update the parameter set of the action feedback model to obtain the trained action feedback model. This process is also referred to as an update process of the action feedback model. Because the preference data is used as a supervision signal, the action feedback model can learn and recover a potential reward function, and the action feedback model can calculate a more precise estimated feedback value, thereby improving precision of the action feedback model.

A possible manner of training the action feedback model is described below by using an example. The training manner includes operations B1 to B4:

**B1: The training server performs trajectory sampling based on the state topology graph, to obtain a plurality of pairs of sampling trajectories, where each pair of sampling trajectories includes a pair of sampling trajectories having the same length.**

In some embodiments, the training server may obtain multiple pairs of sampling trajectories from the state topology graph through random sampling or non-random sampling. Each pair of sampling trajectories includes a pair of sampling trajectories having the same length. For ease of data storage, it may be required that all pairs of sampling trajectories have the same length. For example, sampling trajectories in all pairs of sampling trajectories are controlled to have the same length, for example, the length of all sampling trajectories is 10, to improve sampling trajectory access efficiency. Alternatively, it may be only required that lengths of two sampling trajectories in each pair of sampling trajectories are the same, but it is not required that lengths of all pairs of sampling trajectories are the same. For example, lengths of two sampling trajectories in one pair of sampling trajectories are both 10, but lengths of two sampling trajectories in another pair of sampling trajectories are both 15. This is not specifically limited in some embodiments.

In some embodiments, the training server sets a sampling length, ensures that trajectory lengths of all the sampling trajectories are the same as the sampling length, and then randomly pairs all the sampling trajectories, to form multiple pairs of sampling trajectories. In this way, randomness in a pairing process can be increased. In addition, the trajectory length of each pair of sampling trajectories is the same as the sampling length.

In some other embodiments, the training server sets the sampling length, ensures that the trajectory lengths of all the sampling trajectories do not exceed the sampling length, and pairs all the sampling trajectories according to the trajectory lengths, so that trajectory lengths of two sampling trajectories included in each pair of sampling trajectories that is successfully paired are the same (and certainly do not exceed the sampling length), to form multiple pairs of sampling trajectories. In this way, preference data of sampling trajectories of different lengths can be collected, and diversity of the multiple pairs of sampling trajectories is improved. A sampling manner and a pairing manner of the multiple pairs of sampling trajectories are not specifically limited in some embodiments.

A possible trajectory sampling manner is described below by using an example. The trajectory sampling manner includes the following operations B11 to B13:
**B11: The training server randomly samples from the node set of the state topology graph, to obtain a plurality of sampling points.**

In some embodiments, the training server first randomly samples from the node set to obtain multiple sampling points. Each sampling point may be used as a start point of one sampling trajectory.

**B12: The training server uses any one of the plurality of sampling points as a start point to perform trajectory sampling along one or more directed edges starting from the start point, and stops the trajectory sampling when a trajectory length of the trajectory sampling reaches a sampling length, to obtain a sampling trajectory of the trajectory sampling.**

In some embodiments, for each sampling point, the sampling point may be used as a start point of a sampling trajectory, and trajectory sampling is gradually performed along a directed edge starting from the start point. That is, along a directed edge starting from the start point, an arrival node to which the directed edge points is found, and is used as a second node of the sampling trajectory. Next, along a directed edge starting from the second node, an arrival node to which the directed edge points is found, and is used as a third node of the sampling trajectory. This sampling process is repeated, until no extended directed edge is found on an arrival node, or a trajectory length reaches a sampling length. In this case, sampling is stopped, to obtain a sampling trajectory.

In some embodiments, if a key-value data structure is constructed based on the state topology graph, for any node in a sampling trajectory, a total of possible actions in a state indicated by the node may be determined. Then, an action is randomly selected from all the possible actions, and an action hash value of the selected action is used as an index to query whether the constructed key-value data structure is matched. If the key-value data structure can be matched, a state hash value stored in a value is extracted, and a node number of a next node can be found according to the state hash value. The key-value data structure is merely used as an example for description herein. Alternatively, the training server may improve query efficiency based on the state topology graph by using another data structure such as a linked list, a dynamic array, or an adjacency matrix. This is not specifically limited in some embodiments.

In some embodiments, after a node in a trajectory is determined during trajectory sampling, because there may be more than one directed edge starting from the node, there may be the following two cases:
**Case 1:** If there is only one directed edge starting from a current node, the training server uses, as a next node of the node in the sampling trajectory, an arrival node/ arrived node to which the only one directed edge points.

If there is only one directed edge starting from the node, directed edge selection does not need to be performed. An arrival node to which this directed edge points is directly used as a next node, and then whether there is only one directed edge starting from the next node continues to be determined. This process is repeated, until no extended directed edge is found on an arrival node, or the trajectory length reaches the sampling length, so as to complete trajectory sampling and obtain a sampling trajectory.

**Case 2:** If there are at least two directed edges starting from the node, the training server selects a directed edge having a highest or lowest empirical action value from the at least two directed edges, determines an arrival node to which the selected directed edge points as the next node, the empirical action value of the selected directed edge is determined based on an empirical action value function, and the empirical action value function is used for providing, based on the state topology graph, an empirical action value of the action performed by the agent.

If there are at least two directed edges starting from the node, this involves a decision-making process of determining a directed edge along which a next node in a sampling trajectory is determined. In the state topology graph, an empirical action value *Q̂*(*s*, *a*) is further recorded for each directed edge. Therefore, a first directed edge having a highest empirical action value and a second directed edge having a lowest empirical action value may be determined from the at least two directed edges, and a directed edge is randomly selected from the first directed edge and the second directed edge. After a directed edge is selected from the at least two directed edges, an arrival node to which the selected directed edge points is used as a next node, and then whether there is only one directed edge starting from the next node continues to be determined. This process is repeated, until no extended directed edge is found on an arrival node, or the trajectory length reaches the sampling length, so as to complete trajectory sampling and obtain a sampling trajectory.

In case 2, a manner of selecting a directed edge from the directed edge having the highest or lowest empirical action value is used, so that both an action having a relatively high empirical action value and an action having a relatively low empirical action value can be sampled, thereby enriching an information volume of sampling trajectories and ensuring diversity of the sampling trajectories. Different sampling trajectories are greatly differentiated from each other due to sampling randomness, which helps obtain an annotation result that can be easily distinguished and learned. This reduces a probability of pairing two sampling trajectories having poor sample quality. This is because an annotation result of this pair of sampling trajectories has little meaning and is not beneficial to training of the action feedback model.

In some other embodiments, only the directed edge having the highest empirical action value may be selected from the at least two directed edges, or only the directed edge having the lowest empirical action value may be selected from the at least two directed edges, or screening may be performed not according to empirical action values, and instead a directed edge is directly randomly selected from the at least two directed edges. In this way, trajectory sampling can also be completed based on the state topology graph, and sampling randomness is ensured. This is not specifically limited in some embodiments.

In some other embodiments, branching may start from this node. One sampling trajectory continues to be sampled along the directed edge having the highest empirical action value, and the other sampling trajectory continues to be sampled along the directed edge having the lowest empirical action value. In this way, a pair of sampling trajectories that can be successfully paired can be quickly obtained. A part of the pair of sampling trajectories overlaps, but two different sampling segments are generated starting from this node. The pair of sampling trajectories has higher contrast and a larger amount of information. From the perspective of improving sampling effects of the sampling trajectories, this helps improve precision of the action feedback model obtained from learning.

**B13: The training server pairs the plurality of sampling trajectories according to respective trajectory lengths of the plurality of sampling trajectories, to obtain the plurality pairs of sampling trajectories.**

In some embodiments, for each sampling point in operation B11, a sampling trajectory using the sampling point as a start point is obtained through operation B12. All sampling points in operation B11 are traversed to obtain multiple sampling trajectories. However, trajectory lengths of the sampling trajectories may be different. A different sampling length may be used each time a trajectory is sampled. Consequently, trajectory lengths are different due to different sampling lengths. In addition, during trajectory sampling, if sampling is stopped because no extended directed edge is found on an arrival node, a trajectory length of an obtained sampling trajectory is less than the sampling length. Therefore, even if sampling lengths are the same, trajectory lengths are different. In view of this, the multiple sampling trajectories finally obtained may have the same or different trajectory lengths. To ensure that trajectory lengths of two paired sampling trajectories are the same, the multiple sampling trajectories are paired according to trajectory lengths, so that preference data of sampling trajectories of different lengths may be collected, and diversity of each pair of sampling trajectories is improved. A pairing manner of multiple pairs of sampling trajectories is not specifically limited in some embodiments. Alternatively, for convenience, the training server may preset a trajectory length, discard a sampling trajectory that does not conform to the trajectory length, and then perform random pairing on all remaining sampling trajectories having the same length. In this way, efficiency of constructing multiple pairs of sampling trajectories may be improved.

In operations B11 to B13, a manner of sampling a pair of trajectories is provided. Preference data is collected by using a pair of trajectories as a unit. Data collection efficiency is high.

In some other embodiments, after all the sampling points are traversed in operation B11 and the multiple sampling trajectories are obtained in operation B12, pairing is not performed from a trajectory level. Instead, each sampling trajectory is cut into multiple sampling segments through extracting, cutting, and the like, and then segment pairing is performed according to whether lengths are the same from all sampling segments obtained after sampling trajectories are cut, to obtain multiple pairs of sampling segments. Each pair of sampling segments includes a pair of sampling segments having the same length. For ease of data storage, it may be required that all pairs of sampling segments have the same length. For example, sampling segments in all pairs of sampling segments have the same length, for example, the length of all sampling segments is 5, to improve sampling segment access efficiency. Alternatively, it may be only required that lengths of two sampling segments in each pair of sampling segments are the same, but it is not required that lengths of all pairs of sampling segments are the same. For example, lengths of two sampling segments in one pair of sampling segments are both 3, but lengths of two sampling segments in another pair of sampling segments are both 5. This is not specifically limited in some embodiments.

In the foregoing implementation, a manner of sampling a pair of segments is provided. Preference data is collected by using a pair of segments as a unit. Data utilization of a sampling trajectory is higher, and richer sample data can be generated.

**B2: The training server collects annotation results each for a respective pair of the plurality of pairs of sampling trajectories and each indicating preference levels for two sampling trajectories in each pair of sampling trajectories with respect to a task executed by the agent.**

In some embodiments, after obtaining multiple pairs of sampling trajectories in operation B1, the training server directly presents the multiple pairs of sampling trajectories to a technician for annotation, and annotation results of the multiple pairs of sampling trajectories are collected. The annotation results are used for indicating preference levels of different sampling trajectories in each pair of sampling trajectories relative to a task executed by the agent. In other words, the sampling trajectories are presented in pairs to a technician for annotation. The technician may annotate, in each pair of sampling trajectories, a sampling trajectory that better satisfies a preference (or expectation). In this way, each pair of sampling trajectories is divided into a positive sample trajectory and a negative sample trajectory. The positive sample trajectory indicates a sampling trajectory annotated as satisfying a preference, and the negative sample trajectory indicates a sampling trajectory annotated as not satisfying a preference. Therefore, the annotation result reflects human preference levels for two sampling trajectories in each pair of sampling trajectories. In some examples, each pair of sampling trajectories may also be inputted into a large model, and the large model annotates each pair of sampling trajectories. This is not specifically limited in some embodiments. Such a manner of collecting preference data based on a pair of trajectories has a simple process, few annotations, and high collection efficiency.

In some other embodiments, after multiple pairs of sampling segments are obtained as described in operation B13, the multiple pairs of sampling segments may be presented to a technician for annotation, and annotation results of the multiple pairs of sampling segments are collected. The annotation results are used for indicating satisfaction degrees of different sampling segments in each pair of sampling segments relative to a task executed by the agent. In other words, the sampling segments are presented in pairs to a technician for annotation. The technician may annotate, in each pair of sampling segments, a sampling segment that better satisfies a preference (or expectation). In this way, each pair of sampling segments is divided into a positive sample segment and a negative sample segment. The positive sample segment indicates a sampling segment annotated as satisfying a preference, and the negative sample segment indicates a sampling segment annotated as not satisfying a preference. Therefore, the annotation result reflects human preference levels for two sampling segments in each pair of sampling segments. In some examples, each pair of sampling segments may also be inputted into a large model, and the large model annotates each pair of sampling segments. This is not specifically limited in some embodiments. Such a manner of collecting preference data based on a pair of segments has higher data utilization of sampling trajectories, can generate richer sample data, and obtain more informative preference data.

**B3: The training server trains the action feedback model based on the state topology graph and the annotation result when a feedback model update condition is satisfied.**

In some embodiments, because annotation of sampling trajectories by a technician may be a continuous long process, a feedback model update condition may be preset. In this way, when the feedback model update condition is satisfied, the action feedback model is updated based on preference data collected from a period of time starting from a previous update to a current moment. For example, the feedback model update condition may be periodically updated, for example, updated once every two days or updated once every week, or updated once each time annotation results of 500 pairs of sampling trajectories are collected. Specific content of the feedback model update condition is not specifically limited herein.

When the feedback model update condition is satisfied, the training server uses the preference data as a supervision signal, and performs iterative training on the action feedback model in a supervised learning manner, to update a parameter set of the action feedback model to obtain the trained action feedback model.

In some embodiments, in a manner of collecting preference data based on a pair of trajectories, when the preference data is used as a supervision signal to perform supervised learning, an annotation result of each pair of sampling trajectories indicates that the pair of sampling trajectories includes one positive sample trajectory and one negative sample trajectory. The action feedback model is used to determine estimated feedback values of actions in the positive sample trajectory and the values are summed, to obtain a positive sample feedback sum value. Similarly, estimated feedback values of actions in the negative sample trajectory are determined and the values are summed, to obtain a negative sample feedback sum value. Further, a preference loss term is introduced to a loss function of the action feedback model, so that the positive sample feedback sum value of each positive sample trajectory is controlled to be as high as possible and the negative sample feedback sum value of each negative sample trajectory is controlled to be as low as possible. In this way, the parameter set of the action feedback model is optimized by using the preference loss term. Iterative training is performed on the parameter set of the action feedback model, and the training is stopped when a loss function value converges or an iteration step count reaches a specified step count, to complete an update of the parameter set of the action feedback model.

In some other embodiments, in a manner of collecting preference data based on a pair of segments, when the preference data is used as a supervision signal to perform supervised learning, an annotation result of each pair of sampling segments indicates that the pair of sampling segments includes one positive sample segment and one negative sample segment. The action feedback model is used to determine estimated feedback values of actions in the positive sample segment and the values are summed, to obtain a positive sample feedback sum value. Similarly, estimated feedback values of actions in the negative sample segment are determined and the values are summed, to obtain a negative sample feedback sum value. Further, a preference loss term is introduced to a loss function of the action feedback model, so that the positive sample feedback sum value of each positive sample segment is controlled to be as high as possible and the negative sample feedback sum value of each negative sample segment is controlled to be as low as possible. In this way, the parameter set of the action feedback model is optimized by using the preference loss term. Iterative training is performed on the parameter set of the action feedback model, and the training is stopped when a loss function value converges or an iteration step count reaches a specified step count, to complete an update of the parameter set of the action feedback model.

In operations B1 to B3, after the annotation result, for example, the preference data, is collected, the preference data is used to guide a training process of the action feedback model. Because the preference data can reflect an expectation of a human (or a large module) on a behavior of an agent, the action feedback model can learn and recover a potential reward function, and the action feedback model can calculate a more precise estimated feedback value, thereby improving precision of the action feedback model.

Further, sampling trajectories are collected through trajectory sampling. A sample that does not appear in a historical trajectory may appear in a sampling trajectory. This is because the state topology graph can combine state transition of previous historical trajectories and combine the same state involved in different historical trajectories, so as to obtain new sampling trajectories through combination during trajectory sampling. These new sampling trajectories are not obtained from one historical trajectory, and instead are obtained by combining segments of multiple historical trajectories, and do not belong to any historical trajectory. Therefore, data diversity of the sampling trajectories can be enriched.

In some other embodiments, an idea of contrastive learning of positive samples and negative samples may also be introduced to combine supervised learning and contrastive learning, to implement iterative training of the action feedback model. A manner of training the action feedback model is not specifically limited in some embodiments.

Operations B1 to B3 describe how to update the action feedback model based on the state topology graph. In the preference-based reinforcement learning framework in some embodiments, when an action value update condition is satisfied, empirical action values of actions indicated by some or all directed edges in the state topology graph may further be updated. This process is referred to as a graph update process. Because a calculation amount of updating empirical action values of the entire graph each time is high, only empirical action values of actions indicated by some directed edges may be updated each time, to reduce calculation overheads and improve update efficiency. For example, some values are updated below in operation B4.

**B4: When an action value update condition is satisfied, the training server updates, according to the empirical action value function, empirical action values of actions indicated by some directed edges in the state topology graph, where the empirical action value function is used for calculating the empirical action value of the action based on the state topology graph.**

In some embodiments, because even if only empirical action values of actions indicated by some directed edges are updated each time, there are some calculation overheads in an update process. Therefore, an action value update condition may be preset, and when the action value update condition is satisfied, a graph update process is performed once, thereby effectively reducing calculation overheads. In some examples, the action value update condition may be periodically updated, for example, updated once every two days or updated once every week, or updated once each time 200 pieces of transition data are collected in the empirical replay buffer. Specific content of the action value update condition is not specifically limited herein.

Both the action feedback model and the empirical action value may be periodically updated or updated after condition triggering. However, if the action feedback model and the empirical action value are periodically updated, update periods of the action feedback model and the empirical action value are not required to be consistent. The action feedback model and the empirical action value may be separately updated according to independent periods. For example, the action feedback model is updated once every two days and the empirical action value is updated once daily. This is not specifically limited in some embodiments.

When the action value update condition is satisfied, the training server starts a graph update process of the state topology graph. To be specific, for a support action set *∂A*(*s*) of each to-be-updated node, when updating an empirical action value of each action in the support action set ∂*A*(*s*), recalculation and value assignment are usually performed based on an original value according to a preset empirical action value function, to correct a possible deviation of the original value.

In some embodiments, a graph update process includes the following operations B41 to B43:
**B41: The training server samples from a node set of the state topology graph when the action value update condition is satisfied, to obtain a plurality of to-be-updated nodes.**

In some embodiments, the training server randomly samples multiple to-be-updated nodes from the node set, or performs probability sampling according to latest access time stamps of nodes in the node set, to obtain multiple to-be-updated nodes. The probability sampling herein means that a node whose latest access time stamp is the largest (for example, closer to a current moment) is controlled to be sampled as a to-be-updated node at a higher probability. These nodes are nodes that have been accessed recently, and may be important nodes at a current stage in a training process. Updating empirical action values of actions in a support action set of these nodes can ensure a desirable graph update effect.

In an exemplary scenario, probability sampling is performed in the node set according to latest access time stamps of nodes, to obtain multiple to-be-updated nodes. The multiple to-be-updated nodes may form a subset ∂*V* of the node set. Then, operations B42 to B44 are sequentially performed on the multiple to-be-updated nodes in the subset ∂*V* based on a descending order of latest access time stamps, thereby completing a graph update process of all the to-be-updated nodes. The descending order of the latest access time stamps can ensure that an empirical action value of a to-be-updated node accessed more recently is updated earlier. In this way, efficiency of updating the empirical action value can be improved. In some embodiments, alternatively, the multiple to-be-updated nodes in the subset ∂*V* may be processed according to a sampling sequence, or the multiple to-be-updated nodes in the subset ∂*V* may be processed in a random order. This is not specifically limited in some embodiments.

Because action value update processes of different to-be-updated nodes are the same, an action value update process of one to-be-updated node is used as an example below, and operations B42 to B44 are used as an example for description.

**B42: The training server determines a support action set for each to-be-updated node, where the support action set includes a set of actions indicated by directed edges starting from the to-be-updated node.**

For the state topology graph, each to-be-updated node has a support action set ∂*A*(*s*) ∈ V. In an action value update rule of each to-be-updated node, it may be set that a maximum operator for graph update is operation in the support action set ∂*A*(*s*), for example, all actions in the support action set ∂*A*(*s*) are updated, instead of updating all actions of all directed edges in an entire directed edge set. In this way, calculation overheads in an update process of each to-be-updated node can be further reduced, and action value update efficiency of a single node can be improved.

In some embodiments, for each to-be-updated node, all directed edges starting from the to-be-updated node are determined. A set of all actions indicated by the directed edges is the support action set *∂A*(*s*) of the to-be-updated node. When an empirical action value is updated in a support action set, an action that is not included in the support action set is not considered. In this way, excessive estimation of the empirical action value can be avoided, for example, it is ensured as much as possible that the empirical action value is not estimated as being excessively large or excessively small, so that estimation of the empirical action value is more precise.

**B43: The training server updates an empirical action value of each action in the support action set.**

In some embodiments, for each to-be-updated node, the support action set ∂*A*(*s*) of the to-be-updated node is determined in operation B42. Then, for each action a in the support action set, an empirical action value is calculated and value assignment is performed again according to a preset empirical action value function, to correct possible deviation of an original value.

In some embodiments, the empirical action value function may be set to cover an iterative update process of all actions in the support action set ∂*A*(*s*), so as to quickly implement traverse update of empirical action values of all the actions. Exemplarily, any iteration in the foregoing iterative update process is described. Each iterative update of an empirical action value of an action in the support action set is described with reference to the following operations B43a to B43e:

**B43a: The training server determines, for any action in the support action set, a plurality of target nodes that can be reached by performing the action starting from the to-be-updated node.**

In some embodiments, for each action a in the support action set ∂*A*(*s*), because multiple different target nodes may be reached when the action a is performed starting from the to-be-updated node s, the training server determines multiple target nodes s' ∈ S that can be reached when the action a is performed starting from the to-be-updated node s, where S indicates all nodes included in the node set V. For example, assuming that a target node s1 (for example, s1 indicates a state of falling down) may be reached and a target node s2 (for example, s2 indicates a state of going backwards) may also be reached when the action a (for example, going straight) is performed starting from the to-be-updated node s, multiple target nodes that may be reached when the action a is performed starting from the to-be-updated node s include s1 and s2. In this case, the state topology graph may include a directed edge pointing from s to s1 and a directed edge pointing from s to s2, and the two directed edges both indicate the action a.

**B43b: The training server determines, based on a number of access times of each directed edge along which each target node is reached by performing the action starting from the to-be-updated node, an empirical transition probability that the to-be-updated node reaches each target node through the action.**

In some embodiments, for each target node s' found in operation B43a, a unique directed edge starting from the to-be-updated node s and reaching the target node s' can be determined from the directed edge set, and then a number of access times *N*(*s*, *a*, *s'*) of the directed edge is queried. The operation of obtaining a number of access times is repeatedly performed for all target nodes s' ∈ S, and numbers of access times *N*(*s*, *a*, *s'*) of all directed edges that indicate the action a and that start from the to-be-updated node can be found. All the found numbers of access times *N*(*s*, *a*, *s'*) are summed, to obtain a total number of access times of all the directed edges that indicate the action a and that start from the to-be-updated node s. Next, a value obtained by dividing a number of access times of a current directed edge by the total number of access times is used as an empirical transition probability that the to-be-updated node s reaches the target node s'.

For example, *p̂(s'*|*s, a*) represents an empirical transition probability that the to-be-updated node s reaches the target node s' through the action a. Then, the empirical transition probability is expressed as the following formula: $\hat{p} \left(s′\left|s, a\right.\right) = N \left(s,a,s′\right) / {\sum }_{s ′ ∈ S} N \left(s,a,s′\right)$

where *N*(*s*, *a*, *s'*) represents a number of access times of the directed edge starting from the to-be-updated node s to the target node s' through the action a, and ∑_{*s'*∈}*_{S}N*(*s*, *a*, *s*') represents a total number of access times of all the directed edges that indicate the action a and that start from the to-be-updated node s.

**B43c: The training server determines, based on the action feedback model, an estimated feedback value of performing the action starting from the to-be-updated node, where the estimated feedback value indicates an estimated feedback signal generated by the environment when the agent performs the action.**

In some embodiments, for the to-be-updated node s and each action a in the support action set *∂A*(s), the to-be-updated node s and the action a are inputted into the action feedback model, and an estimated feedback value *r̂_{φ}*(*s*, *a*) of performing the action a starting from the to-be-updated node s is calculated based on the action feedback model. For example, the action feedback model may be a reward neural network *r̂_{φ}*, and the to-be-updated node s and the action a are inputted into the reward neural network *r̂_{φ}*, to output an estimated feedback value *r̂_{φ}*(*s*, *a*). For each action a in the action set *∂A*(s), an estimated feedback value may be calculated through operation B43c.

**B43d: The training server updates the empirical action value of the action based on the empirical transition probability that the to-be-updated node reaches each target node through the action, the estimated feedback value, and the empirical action value of each target node.**

In some embodiments, based on the empirical transition probability calculated for each target node s' in operation B43b, the estimated feedback value *r̂_{φ}*(*s*, *a*) calculated for the action a in operation B43c, and an original value *Q̂*(*s'*) of an empirical action value recorded for the target node s', an empirical action value may be calculated for the to-be-updated node s and the action a.

In some embodiments, for the to-be-updated node s and the action a, the empirical action value *Q̂*(*s*, *a*) of the action a is calculated in the following formula (for example, an empirical action value function): $\hat{Q} \left(s, a\right) = {\hat{r}}_{φ} \left(s, a\right) + γ {\sum }_{s ′ ∈ S} \hat{p} \left(s′\left|s, a\right.\right) \hat{Q} \left(s′\right)$
where *r̂_{φ}*(*s*, *a*) represents an estimated feedback value calculated for the to-be-updated node s and the action a, *γ* is a hyper-parameter representing a weight, and *p̂*(*s'*|*s*, *a*) represents an empirical transition probability that the to-be-updated node s reaches the target node s' through the action a.

**B43e: The training server assigns a maximum value of empirical action values of actions in the support action set to an empirical action value of the to-be-updated node.**

In some embodiments, if the to-be-updated node s does not change, for each action a in the support action set *∂A*(*s*) of the to-be-updated node s, an empirical action value of performing the action a starting from the to-be-updated node s can be calculated by using operations B43a to B43d. All the actions in the support action set *∂A*(*s*) may be traversed to obtain empirical action values of all the actions, and the maximum value of the empirical action values may be used as a new value *Q̂*(*s*) and is assigned to an empirical action value recorded for the to-be-updated node s in the state topology graph. In other words, the empirical action value recorded for the to-be-updated node s is changed from an original value to the new value *Q̂*(*s*). Operations B43a to B43e are iteratively performed for all to-be-updated nodes, to complete an iterative update of action values.

In some embodiments, for the to-be-updated node s, a new value *Q̂*(*s*) of an empirical action value is assigned in the following formula: $\hat{Q} \left(s\right) ← {max}_{a ∈ \partial A \left(s\right)} \left({\hat{r}}_{φ}\left(s, a\right)+γ{\sum }_{s ′ ∈ S} \hat{p} \left(s′\left|s, a\right.\right) \hat{Q} \left(s′\right)\right)$

In operations B43a to B43e, for each action in the support action set *∂A*(s), the empirical transition probability based on the number of access times is introduced, so that original values of empirical action values of target nodes that may be reached by performing the action a starting from the to-be-updated node s may be weighted based on the empirical transition probabilities. Then, the empirical action value of the action a is calculated with reference to the estimated feedback value provided by the action feedback model. Finally, the maximum value of newly calculated empirical action values of all actions in the support action set *∂A*(*s*) is assigned to the empirical action value of the to-be-updated node, to update the empirical action value of the to-be-updated node.

In some other embodiments, the state topology graph may be configured as a graph neural network, so that the graph neural network learns an appropriate value of an empirical action value under guidance of the estimated feedback value and the number of access times. An action value update manner is not specifically limited in some embodiments.

In operations B41 to B43, a possible action value update method for an empirical action value of each action in a support action set of a to-be-updated node is provided, so that the empirical action value can be quickly updated with less calculation overheads.

In some other embodiments, the entire graph may be updated each time an action value is updated. In this way, an empirical action value of each action in the state topology graph can be updated, and empirical distribution of each action can be more precisely restored. Whether to update the entire graph of empirical action values is not specifically limited in some embodiments.

Operation B4 relates to an action value update process, and the training server may not update the empirical action value. This is not specifically limited in some embodiments.

**403: The training server updates an estimated feedback value of each directed edge in the state topology graph after update of the action feedback model is completed, where the estimated feedback value represents an estimated feedback signal generated by the environment in response to the agent executing an action represented by the directed edge.**

In some embodiments, as described in operation 402, the action feedback model may be updated each time when the feedback model update condition is satisfied. After the action feedback model is updated each time, the training server may re-annotate, based on the updated action feedback model, an estimated feedback value recorded on each directed edge in the state topology graph. In other words, an estimated feedback value of each directed edge in the state topology graph is calculated and updated again based on the updated action feedback model. Therefore, the performance of the action feedback model is improved after update each time.

For example, the action feedback model is a reward neural network *r̂_{φ}*. Each time the reward neural network *r̂_{φ}* is updated, for any node s and an action a in the state topology graph, the node s and the action a are inputted into the updated reward neural network *r̂_{φ}*, to output an estimated feedback value *r̂_{φ}*(*s*, *a*) of executing the action a from the node s. An old value is replaced with the outputted new value.

In the foregoing process, each time the action feedback model is updated, an estimated feedback value maintained on each directed edge in the state topology graph is re-annotated based on the action feedback model, to ensure that the estimated feedback value is a new value that is most accurately estimated at a current moment. This can alleviate impact caused by a non-stationary reward function. This is because during periodic update, a potential reward function learned by the action feedback model is always fine-tuned and optimized. Therefore, the reward function does not always tend to be stable. By replacing an old value with a new value in time, it can be ensured that an estimated feedback value stored in the state topology graph can reflect a reward signal evaluated by a latest action feedback model, and precision of information included in the state topology graph is also improved.

**404: Train an action value model of the agent based on the state topology graph and the action feedback model, the action value model being configured to provide, for an action executed by the agent, an estimated action value measuring an impact of the action on the environment.**

In some embodiments, both an empirical action value and an estimated feedback value in the state topology graph may be updated. The empirical action value may be calculated and updated by using an empirical action value function and a latest state topology graph. The empirical action value function is described in operation B43e. Only an old value of an empirical action value of each node may be provided at an initialization stage, and subsequently, the empirical action value of each node relative to each action may be continuously updated in the manner described in operations B43a to B43e, so that after being updated for multiple times, the empirical action value can reflect empirical action value distribution in a historical trajectory.

In some embodiments, the empirical action value function and the action feedback model may guide training of the action value model of the agent. The action value model is configured to evaluate impact of an action executed by the agent on an environment. The empirical action value function can reflect empirical distribution of actions in historical trajectories, so as to guide training of the action value model from the perspective of empirical statistics. The action feedback model guides training of the action value model from the perspective of a reward signal of an environment (a larger reward of the environment indicates a higher corresponding action value). Therefore, with reference to the empirical action value function and the action feedback model, a training process of the action value model can be constrained, to obtain an action value model with better precision and performance, so that the action value model calculates the estimated action value more precisely. In addition, a human intention or preference is satisfied to some extent.

The following describes an example of a possible manner of training the action value model with reference to operations C1 to C4. In this training manner, a constraint loss term is constructed for a loss function of the action value model based on the empirical action value function, to regularize the action value model, so that an over-estimation error and an extrapolation error of a learning process of the action value model for the action value function can be relieved. In addition, an action value loss term is further considered to measure a difference between the estimated action value provided by the action value model and the target action value in optimized learning. Assisted by both the constraint loss term and the action value loss term, the action value model with better precision and performance can be obtained through training. In addition, generalizability of the action value model can be improved. A manner of training the action value model includes the following operations C1 to C4:
**C1: The training server obtains, in any iteration of training the action value model, an estimated action value of an action represented by each directed edge in the state topology graph.**

In some embodiments, iterative training is performed on the action value model based on the empirical action value function and the action feedback model. In any iteration of the iterative training process of the action value model, an estimated action value may be calculated for each directed edge in the state topology graph based on the initial action value model. The estimated action value represents estimation by the action value model for an action value of an action indicated by the directed edge. The estimated action value is different from an empirical action value. The empirical action value is an empirical value derived from empirical distribution of the state topology graph, and the estimated action value is a predicted value calculated from action distribution learned by the action value model.

In some embodiments, for any directed edge in the state topology graph, an initial state st indicated by an initial node of the directed edge and an action at indicated by the directed edge are both inputted into the action value model *Q_{θ},* to obtain an estimated action value *Q_{θ}*(*sₜ*, *aₜ*) of the action at. By repeating the foregoing operations, an estimated action value of an action indicated by any directed edge may be obtained.

**C2: The training server obtains a constraint loss term based on an empirical action value function and the estimated action value, where the constraint loss term represents a distribution difference between an empirical distribution of action values derived from the state topology graph and a model distribution of action values predicted by the action value model.**

In some embodiments, for any directed edge in the state topology graph, a group of data associated with the directed edge may be exported from the state topology graph: an initial state st indicated by an initial node of the directed edge, an action at indicated by the directed edge, and an arrival state sₜ₊₁ indicated by an arrival node of the directed edge. The action feedback model calculates an estimated feedback value *r̂_{φ}*(*sₜ*, *aₜ*) according to the initial state st and the action at. The empirical action value function calculates an empirical action value *Q̂*(*sₜ*, *aₜ*) based on the initial state st and the action at, where t indicates a time stamp of the initial state st, and t+1 indicates a time stamp of the arrival state sₜ₊₁. Therefore, for any directed edge, a group of data (*sₜ*, *aₜ*, *s*_{*t*+1}, *r̂_{φ}*(*sₜ*, *aₜ*), *Q̂*(*sₜ*, *aₜ*)) of the directed edge can be obtained from the state topology graph. For brevity, this group of data is referred to as description data of the directed edge.

Further, for any node s in the state topology graph, an action set indicated by all directed edges starting from the node s forms a support action set *∂A*(*s*) of the node. Empirical action values *Q̂*(*sₜ*, *aₜ*) of all actions in the support action set *∂A*(*s*) reflect empirical distribution of the actions on the node s, and the estimated action values *Q_{θ}*(*sₜ*, *aₜ*) of all the actions in the support action set reflect action distribution on the node s learned by the model. Therefore, a constraint loss term of the action value model may be constructed based on a difference between empirical distribution and action distribution of each node in the support action set *∂A*(*s*)*.* For a single node, this constraint loss term considers only a difference between an empirical action value *Q̂*(*sₜ*, *aₜ*) and an estimated action value *Q_{θ}*(*sₜ*, *aₜ*) of each action in the support action set *∂A*(*s*) of the node. This helps constrain a training process of the action value model *Q_{θ}* based on the empirical action value function *Q*, to regularize the action value model *Q_{θ}* and accelerate learning of empirical distribution by the action value model *Q_{θ}*.

In some embodiments, in each training iteration of the action value model *Q_{θ}*, for each node in the state topology graph, an action value error of the node may be calculated according to a difference between an empirical action value *Q̂*(*sₜ*, *aₜ*) and an estimated action value *Q_{θ}*(*sₜ*, *aₜ*) of each action in the support action set *∂A*(*s*) of the node, and mathematical expectation of action value errors of all the nodes is solved to obtain a constraint loss term. In this way, the constraint loss term has a higher information volume, and the constraint loss term is more representative, to better constrain the action value model *Q_{θ}*.

In some other embodiments, in each training iteration of the action value model *Q_{θ}*, if the state topology graph includes many nodes and directed edges, training overheads caused by calculation of the entire graph are large. In this case, some nodes of interest may be sampled from the state topology graph according to a preset sampling rule, only an action value error of each node of interest is calculated according to a difference between an empirical action value *Q̂*(*sₜ*, *aₜ*) and an estimated action value *Q_{θ}*(*sₜ*, *aₜ*) of each action in the support action set *∂A*(*s*) of the node of interest, and mathematical expectation of action value errors of all the nodes of interest is solved to obtain a constraint loss term. In this way, calculation overheads of the constraint loss term are relatively small and training efficiency of the action value model is improved. This is not specifically limited in some embodiments.

A manner of constructing the constraint loss term based on an action value error of a node of interest is used as an example below, and a process of calculating the constraint loss term is described with reference to operations C21 to C24.

**C21: The training server determines a plurality of nodes of interest from the state topology graph, where the node of interest indicates a state to which the agent may pay attention during task implementation.**

In some embodiments, random sampling is performed in the node set of the state topology graph, to obtain multiple nodes of interest. Alternatively, nodes in the node set are arranged in order according to a sequence of being accessed mostly recently, and multiple nodes that are accessed mostly recently are sampled as multiple nodes of interest. Alternatively, sampling is performed in the node set in descending order of numbers of access times, and multiple nodes having highest numbers of access times are sampled as multiple nodes of interest. Alternatively, probability sampling may be performed in the node set according to latest access time stamps of nodes in the same manner of sampling the to-be-updated node described in operation B41, to obtain multiple nodes of interest. A manner of sampling nodes of interest is not specifically limited in some embodiments.

**C22: The training server determines, for any node of interest based on the empirical action value function, an empirical action value of each action in a support action set of the node of interest, where the support action set includes an action set indicated by directed edges starting from the node of interest.**

In some embodiments, for any node of interest determined in operation C21, an action set indicated by all directed edges starting from the node of interest forms a support action set of the node of interest, and an empirical action value of each action in the support action set of the node of interest may be calculated based on the empirical action value function *Q̂*. For example, for a node of interest s, a support action set *∂A*(*s*) of the node of interest s is determined. An empirical action value of each action in the support action set *∂A*(*s*) is determined based on the empirical action value function *Q̂*.

**C23: The training server determines an action value error of the node of interest based on the empirical action value and the estimated action value of each action in the support action set, where the action value error represents a difference between the empirical action value of each action in the support action set and the estimated action value.**

In some embodiments, for any node of interest s determined in operation C21, a support action set *∂A*(*s*) of the node of interest s is considered. An empirical action value of each action in the support action set *∂A*(*s*) can be obtained in operation C22, and an estimated action value of each action in the support action set *∂A*(*s*) can be obtained in operation C1. The empirical action values of all actions in the support action set *∂A*(*s*) reflect empirical distribution of the actions on the node of interest s, and the estimated action values of all the actions in the support action set *∂A*(*s*) reflect action distribution on the node of interest s learned by the model. Therefore, for each node of interest, an action value error of the current node of interest can be obtained according to the difference between the empirical distribution and the action distribution in the support action set *∂A*(*s*)*.*

In some embodiments, for each action in the support action set *∂A*(*s*) of a node of interest s, a difference between an empirical action value and an estimated action value of this action may be calculated, and an average value of absolute values of differences of all actions is obtained and the average value is used as a final action value error of the node of interest s. Alternatively, a mean squared error of absolute values of differences of all actions may be calculated, and the mean squared error is used as the final action value error of the node of interest s. This is not specifically limited in some embodiments.

In some other embodiments, in addition to calculating an average value and calculating a mean squared error, the action value error of the node of interest s may be calculated based on an action value vector. This is described below with reference to operations C23a to C23c:

**C23a: The training server determines an empirical action value vector of the** node **of interest based on the empirical action value of each action in the support action set.**

In some embodiments, for the support action set *∂A*(*s*) of the node of interest s, empirical action values of all actions in the support action set *∂A*(*s*) are combined into a row vector or a column vector, to obtain an empirical action value vector *Q̂*(*s*,·) of the node of interest. The empirical action value vector *Q̂*(*s*,·) is an eigenvector of the empirical action values of all the actions in the support action set *∂A*(*s*)*.*

**C23b: The training server determines an estimated action value vector of the node of interest based on the estimated action value of each action in the support action set.**

In some embodiments, for the support action set *∂A*(*s*) of the node of interest s, estimated action values of all actions in the support action set *∂A*(*s*) are combined into a row vector or a column vector, to obtain an estimated action value vector *Q_{θ}*(*s*,·) of the node of interest. The estimated action value vector *Q_{θ}*(*s*,·) is an eigenvector of the estimated action values of all the actions in the support action set *∂A*(*s*)*.*

**C23c: The training server determines the action value error based on the empirical action value vector and the estimated action value vector.**

In some embodiments, based on an exponential normalization function softmax, exponential normalization is performed on the empirical action value vector *Q̂*(*s*,·) calculated in operation C23a, to obtain a normalized empirical value vector. The normalized empirical value vector represents an empirical policy of an action value, and is denoted as *π̂*(*s*) *= SoftmaxQ̂*(*s*,·). Similarly, based on an exponential normalization function softmax, exponential normalization is also performed on the estimated action value vector *Q_{θ}*(*s*,·) calculated in operation C23b, to obtain a normalized estimated value vector. The normalized estimated value vector represents an estimated policy of the action value model and is also referred to as a model soft policy, and is denoted as *π*_{*soft*(*θ*)}(*s*) = Softmax*Q_{θ}*(*s*,·).

In some embodiments, a Kullback-Leibler divergence (also referred to as KL divergence or relative entropy) between the normalized empirical value vector *π̂*(*s*) and the normalized estimated value vector *π*_{*soft*(*θ*)}*(s)* is determined as an action value error of the node of interest s, and is denoted as *KL*(*π̂*(*s*))∥*π*_{*soft*(*θ*)}(*s*). In this way, relative entropy information between the empirical policy and the model software policy can be introduced into the action value error of the node of interest s, thereby improving precision of an action value error of a single node of interest.

In some other embodiments, alternatively, a Euclidean distance or a cosine distance between the normalized empirical value vector *π̂*(*s*) and the normalized estimated value vector *π*_{*soft*(*θ*)}(*s*) may be determined as the action value error of the node of interest s. In this way, a distance between the empirical policy and the model software policy in a vector space can be considered for the action value error of the node of interest s, so that precision of an action value error of a single node of interest can also be improved. This is not specifically limited in some embodiments.

In operations C23a to C23c, a possible implementation of calculating the action value error of the node of interest s based on an action value vector is provided. In this way, the action value error can measure a degree of difference between the empirical policy and the model software policy in the vector space as comprehensively and accurately as possible, thereby improving precision of an action value error of a single node of interest. In some embodiments, the action value error may be calculated not based on a vector, for example, an average value or a mean squared error is directly calculated. This is not specifically limited in some embodiments.

**C24: The training server obtains the constraint loss term based on the action value error of each node of interest.**

In some embodiments, for any node of interest s determined in operation C21, an action value error of the node of interest s may be calculated according to operations C22 and C23, and then the constraint loss term of this training iteration may be constructed according to the action value error of each node of interest.

In some embodiments, mathematical expectation of an action value error of each node of interest is used as the constraint loss term. In this case, the constraint loss term is expressed in the following formula: ${L}_{dc} \left(θ\right) = {E}_{s ∼ G} \left[KL\left(\hat{π}\left(s\right)\left‖{π}_{soft \left(θ\right)}\left(s\right)\right.\right)\right]$
where 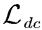 (*θ*) represents a constraint loss term of the action value model, *θ* represents a parameter set of the action value model, 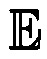 represents mathematical expectation, s represents a node of interest, G represents a state topology graph, KL represents obtaining a KL distance between two vectors, *π̂*(*s*) represents an empirical policy, and *π*_{*soft*(*θ*)}(*s*) represents a model software policy.

In some other embodiments, in addition to obtaining mathematical expectation of the action value error of each node of interest as the constraint loss term, an average value, a mean squared error, or the like of the action value errors of nodes of interest may also be used as the constraint loss term. This is not specifically limited in some embodiments.

In operations C21 to C24, a possible implementation of constructing the constraint loss term based on the action value error of the node of interest is provided. The constraint loss term constructed in this manner can provide constraint in a process of training the action value model *Q_{θ}*, so that an empirical action value function *Q̂* derived from the state topology graph can be used as a lower bound of the action value model *Q_{θ}*. The optimization objective is to control the estimated action value provided by the action value model *Q_{θ}* to be not less than the empirical action value provided by the empirical action value function *Q̂* as much as possible.

Further, because only actions in the support action set ∂*A*(*s*) of some nodes of interest are considered in the constraint loss term, an action value error does not need to be calculated for a node not of interest, thereby greatly reducing calculation overheads of the constraint loss term, and improving training efficiency of the action value model *Q_{θ}*. Therefore, a subsequent process of training the action decision-making model can also be accelerated.

Further, by considering the constraint loss term in the loss function of the action value model *Q_{θ}*, attention may be paid to empirical distribution of actions that have been executed in empirical history. Certainly, potential distribution of actions that have not been executed is not completely discarded. Instead, constraint is imposed on the empirical distribution, so that the empirical action value is used as a lower bound of the estimated action value, thereby effectively reducing over-estimation and extrapolation errors of the action value model *Q_{θ}* for an action value.

**C3: The training server obtains an action value loss term based on the action feedback model and the estimated action value, where the action value loss term represents a difference between the estimated action value of the model for an action and a target action value, and the target action value represents an optimized action value target based on action distribution.**

In some embodiments, in training iteration of the action value model, a loss function thereof further includes an action value loss term in addition to the constraint loss term constructed in operation C2. The action value loss term is used to measure a degree of difference between the estimated action value provided by the model and the target action value. The target action value is an optimized action value target based on the action distribution. During calculation, the target action value may be calculated by using the complete action distribution in the entire state topology graph, and may relate to the decision-making action by the action decision-making model and the estimated feedback value provided by the action feedback model. Therefore, when constructing the action value loss term, the action feedback model and the action decision-making model need to be used. Herein, the action feedback model uses a parameter set obtained after training optimization in operation 402, and the action decision-making model uses a parameter set obtained after a latest training iteration at a current moment.

In some embodiments, for a timestep t, transition data *πₜ* = (*sₜ*, *aₜ*, *s*_{*t*+1}, *r̂_{φ}*(*sₜ*, *aₜ*)) in the timestep t is found from the state topology graph. The target action value is constructed based on each piece of transition data recorded in the state topology graph, and then the action value loss term is constructed based on the estimated action value and the target action value.

An example of a possible manner of constructing the action value loss term is described below with reference to operations C31 to C35. In this construction manner, the action value loss term is implemented as soft Bellman residual as follows:
**C31: The training server randomly samples a directed edge set of the state topology graph, to obtain multiple sampled edges, and determines, for any sampled edge, a sampling state indicated by an initial node of the sampled edge and a sampling action indicated by the sampled edge.**

In some embodiments, in each training iteration of the action value model, the target action value of the current iteration is calculated again through operations C31 to C34, so that a latest fitting result of the target action value is also calculated as the action value model is optimized.

In some embodiments, although all directed edges in the state topology graph can reflect complete action distribution, calculation overheads of calculating target action values on the directed edges of the entire graph are relatively large. Therefore, during calculation of the target action value, random sampling may be performed from the directed edge set, to obtain multiple sampled edges. Because the sampled edges obtained through random sampling can also reflect action distribution that is the same as that of all the directed edges, as long as a target action value is calculated based on the sampled edges, the optimized action value target based on the action distribution can also be well reflected, calculation overheads of the target action value are greatly reduced, and training efficiency of the action value model is improved.

In some other embodiments, target action values may be calculated based on all the directed edges in the state topology graph, so that the target action values used in each training iteration has higher precision. This is not specifically limited in some embodiments.

In operation C31, calculation of a target action value based on a sampled edge is used as an example for description. After multiple sampled edges are obtained from the directed edge set through random sampling, for any sampled edge, a sampling state sₜ indicated by an initial node of the sampled edge and a sampling action at indicated by the sampled edge may be determined.

**C32: The training server determines, based on the action feedback model, an estimated feedback value of executing the sampling action by the agent in the sampling state.**

In some embodiments, for each sampled edge, the sampling state sₜ and the sampling action at of the sampled edge are inputted into the action feedback model *r̂_{ψ}*, and the action feedback model *r̂_{ψ}* outputs an estimated feedback value *r̂_{φ}*(*sₜ, aₜ*) calculated for the sampling state sₜ and the sampling action at. In some embodiments, the estimated feedback value *r̂_{φ}*(*sₜ*, *aₜ*) may be calculated by a latest updated action feedback model *r̂_{φ}* in real time, or may be a value of a latest version cached on a directed edge in the state topology graph. This is not specifically limited in some embodiments.

**C33: The training server determines, based on the action decision-making model, an execution probability that the agent performs the sampling action in the sampling state.**

In some embodiments, for a sampling state sₜ indicated by an initial node of each sampled edge, the sampling state sₜ is inputted into the action decision-making model *π*_{Ø}, and the action decision-making model *π*_{Ø} outputs an execution probability *π*_{Ø}(*aₜ*|*sₜ*) of the sampling action aₜ in the sampling state sₜ. The execution probability represents a probability that the agent performs the sampling action aₜ in the sampling state sₜ. In some embodiments, because the action decision-making model and the action value model may be trained in coordination according to the same pace, or may be separately trained according to different iteration periods, the execution probability *π*_{Ø}(*aₜ*|*sₜ*) is calculated in real time based on a latest updated action decision-making model *π*_{Ø}.

**C34: The training server determines a target action value of the sampling action based on the estimated feedback value of executing the sampling action by the agent in the sampling state, the execution probability, and the estimated action value.**

In some embodiments, for each sampled edge, when a sampling state sₜ and a sampling action at of the sampled edge are given, a target action value *Q_{target}* can be determined based on the estimated feedback value *r̂_{φ}*(*sₜ*, *aₜ*) obtained in operation C32, the execution probability *π*_{Ø}(*aₜ*|*sₜ*) obtained in operation C33, and the estimated action value *Q_{θ}*(*sₜ*, *aₜ*) obtained in operation C1.

A manner of defining the target action value *Q_{target}* is described below by using information entropy. The target action value *Q_{target}* is calculated in the following formula: ${Q}_{target} = {\hat{r}}_{φ} \left({s}_{t}, {a}_{t}\right) + {γπ}_{∅} {\left({a}_{t}\left|{s}_{t}\right.\right)}^{T} \left[{Q}_{θ}\left({s}_{t}, {a}_{t}\right)-α log {π}_{∅}\left({a}_{t}\left|{s}_{t}\right.\right)\right]$
where *Q_{target}* represents a target action value, *r̂_{φ}*(*sₜ*, *aₜ*) represents an estimated feedback value, sₜ represents a sampling state, at represents a sampling action, *γ* is a hyper-parameter, *π*_{Ø}(*aₜ*|*sₜ*) represents an execution probability (for the same sampling state, if there are multiple possible sampling actions, execution probabilities of the sampling actions may form a decision-making vector), *Q_{θ}*(*sₜ*, *aₜ*) represents an estimated action value, *α* is a learnable temperature parameter (the variable *α* may be updated as the parameter set of the action value model is iteratively adjusted), log *π*_{Ø}(*aₜ*|*sₜ*) represents information entropy of a decision-making vector, and a temperature parameter *α* is used for controlling a weight provided by information entropy.

**C35: The training server obtains the action value loss term based on the target action value and the estimated action value.**

In some embodiments, an action value loss term may be constructed based on the target action value *Q_{target}* obtained in operation C34 and the estimated action value *Q_{θ}*(*sₜ*, *aₜ*) obtained in operation C1. For example, an average value or a mean squared error of differences between target action values *Q_{target}* and estimated action values *Q_{θ}*(*sₜ*, *aₜ*) of all the sampling actions is directly solved, so that the action value loss term thereof can be quickly calculated.

In some other embodiments, for each sampling action, a quadratic value of a difference between a target action value *Q_{target}* and an estimated action value *Q_{θ}*(*sₜ*, *aₜ*) of the sampling action may also be obtained, and then mathematical expectation is solved for the calculated quadratic value of each sampling action, to obtain an action value loss term. In this case, the action value loss term is shown in the following formula: ${E}_{{τ}_{t} ∼ G} {\left({Q}_{θ}\left({s}_{t}, {a}_{t}\right)-{Q}_{target}\right)}^{2}$
where *Q_{θ}*(*sₜ*, *aₜ*) represents an estimated action value, strepresents a sampling state, at represents a sampling action, *Q_{target}* represents a target action value, G represents a state topology graph, and *τₜ* represents transition data *πₜ =* (*sₜ*, *aₜ, s*_{*t*+1}, *r̂_{φ}*(*sₜ, aₜ*)) in a timestep t in the state topology graph.

In operations C31 to C35, a method for constructing the action value loss term based on soft Bellman residual is provided, so that information entropy about the decision-making vector can be introduced into the action value loss term. In this way, an information volume of the action value loss term is higher, and the action value loss term can more precisely measure a degree of difference between the estimated action value and the target action value.

**C4: The training server iteratively trains the action value model based on the constraint loss term and the action value loss term.**

In some embodiments, summation or weighted summation may be performed on the constraint loss term obtained in operation C2 and the action value loss term obtained in operation C3, to obtain a loss function value of current training iteration.

In an example, weighted summation is performed on the constraint loss term and the action value loss term. An expression of the loss function of the action value model is as follows: ${J}_{Q} \left(θ\right) = {E}_{{τ}_{t} ∼ G} {\left({Q}_{θ}\left({s}_{t}, {a}_{t}\right)-{Q}_{target}\right)}^{2} + {λL}_{dc} \left(θ\right)$
where *J_{Q}*(*θ*) represents a loss function value of the action value model, ${E}_{{τ}_{t} ∼ G} {\left({Q}_{θ}\left({s}_{t}, {a}_{t}\right)-{Q}_{target}\right)}^{2}$ represents an action value loss term, *λ* is a hyper-parameter (which is a weighting factor of a constraint loss term), and 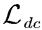 (*θ*) represents the constraint loss term.

When a technician sets an action value optimization stop condition, a loss function value of the action value model in each training iteration can be calculated in the manner provided in operations C1 to C4, and then it is determined whether the action value optimization stop condition is satisfied. If the action value optimization stop condition is satisfied, training is stopped to obtain the trained action value model. If the action value optimization stop condition is not satisfied, a next training iteration continues to be performed. The action value optimization stop condition may be that the loss function value tends to converge, an iteration step count reaches a specified step count, or the like. The action value optimization stop condition is not specifically limited herein.

In the manner of training the action value model provided in operations C1 to C4, a constraint loss term is constructed for a loss function of the action value model based on the empirical action value function, to regularize the action value model, so that an over-estimation error and an extrapolation error of a learning process of the action value model for the empirical action value function can be relieved. In addition, an action value loss term is further considered to measure a difference between the estimated action value provided by the action value model and the target action value in optimized learning. Assisted by both the constraint loss term and the action value loss term, the action value model with better precision and performance can be obtained through training. In addition, generalizability of the action value model can be improved.

In operation 404, a possible implementation in which the training server trains the action value model of the agent based on the state topology graph and the action feedback model is provided. Because the empirical action value function can be derived from the state topology graph, the constraint loss term is constructed by using the empirical action value function, and the action value loss term is constructed through the action feedback model and the action decision-making model. The loss function constructed by combining the constraint loss term and the action value loss term can fully reflect a degree of difference of the action distribution predicted by the model relative to the empirical distribution and the optimization target, so that the finally trained action value model is more generalized.

In some other embodiments, in the loss function of the action value model, only the action value loss term may be considered, and the constraint loss term is not considered. In this way, calculation overheads of the loss function value can be reduced, and training efficiency of the action value model can be improved. This is not specifically limited in some embodiments.

**405: The training server trains an action decision-making model of the agent based on the action value model, the action decision-making model being configured to determine a target action that is to be executed by the agent in a given state.**

In some embodiments, based on the action value model trained in operation 404, the action value model can feed back an estimated action value of each action in a given state, but when parameters of the action decision-making model are different, different actions may be determined in the same state. Therefore, a determined target action is evaluated based on the action value model to obtain an estimated action value, which can reflect precision of parameters of the action decision-making model. The target action is a to-be-executed action that is selected according to the decision-making vector. Therefore, the action value model can assist in completing training optimization of the action decision-making model. Because the action value model with better performance is obtained in operation 404, the finally optimized action decision-making model also has better precision and performance.

In some other embodiments, the action value model and the action decision-making model are trained and optimized in coordination. That is, in each iteration process of iterative training, the action value model and the action decision-making model are updated once according to the state topology graph and the action feedback model. An optimization order of the action value model and the action decision-making model is not limited. The action value model may be updated first and then the action decision-making model is updated, or the action decision-making model may be updated first and then the action value model is updated, or the action value model and the action decision-making model may be updated simultaneously. This is not specifically limited herein. The foregoing optimization process is iteratively performed until the action decision-making model satisfies a decision optimization stop condition. In this case, the trained action decision-making model is obtained. The decision optimization stop condition may be that a loss function value tends to converge, an iteration step count reaches a specified step count, or the like. The decision optimization stop condition is not specifically limited herein. In a coordinated training optimization process, the action value model and the action decision-making model are updated once in each iteration. In this way, the action value model and the action decision-making model can guide each other, thereby further improving precision of the action decision-making model finally obtained after optimization.

A possible manner of training the action decision-making model is described below with reference to operations D1 to D4. In this training manner, a decision-making loss term is introduced to a loss function of the action decision-making model, and an estimated action value outputted by the action value model for an action is considered in the decision-making loss term. In this way, a training process of the action decision-making model can be completed under the guidance of the action value model. Descriptions are provided below:
**D1: The training server determines, in any iteration, a decision-making vector of the agent in a state of a current moment through the action decision-making model, where the decision-making vector represents respective probabilities with which the agent are to execute a plurality of actions at the current moment.**

In some embodiments, for a given state sₜ at a current moment t, the state sₜ is inputted into the action decision-making model *π*_{Ø}, and the action decision-making model *π*_{Ø} outputs a decision-making vector *π*_{Ø}(*aₜ*|*sₜ*) of the state sₜ. The decision-making vector includes an execution probability of executing each possible action by the agent in the state sₜ. Each execution probability represents a possibility that the agent executes a possible action in the state sₜ.

**D2: The training server determines a scoring vector of action values of the agent in the state of the current moment based on the action value model, where the scoring vector indicates respective estimated action values of the plurality of actions to be executed by the agent at the current moment.**

In some embodiments, for a given state sₜ at a current moment t, the action decision-making model *π*_{Ø} outputs a decision-making vector *π*_{Ø}(*aₜ*|*sₜ*) of the state sₜ. The decision-making vector *π*_{Ø}(*aₜ*|*sₜ*) includes an execution probability of executing each possible action by the agent in the state sₜ. Then, the state sₜ and each possible action at can form a state-action pair, and each pair of the state sₜ and the action at is inputted into the action value model *Q_{θ}*. The action value model *Q_{θ}* outputs an estimated action value *Q_{θ}*(*sₜ*, *aₜ*) for each pair of the state sₜ and the action at. A scoring vector *Q_{θ}*(*sₜ*) of the state sₜ may be constructed based on estimated action values *Q_{θ}*(*sₜ, aₜ*) of all possible actions at in the state sₜ. In some embodiments, because the action decision-making model *π*_{Ø} and the action value model *Q_{θ}* may be trained in coordination according to the same pace, or may be separately trained according to different iteration periods, the scoring vector *Q_{θ}*(*sₜ*) is calculated in real time based on a latest updated action value model *Q_{θ}.*

For example, in a coordinated training framework, in each training iteration, the action decision-making model *π*_{Ø} calculates a decision-making vector *π*_{Ø}(*aₜ*|*sₜ*) of the agent in a current state sₜ. Then, the agent determines, according to the decision-making vector *π*_{Ø}(*aₜ*|*sₜ*)*, a* to-be-executed action, and performs the action at and interacts with the environment. The environment provides an estimated feedback value *r̂_{φ}*(*sₜ*, *aₜ*) based on the action feedback model *r̂_{φ}* and reaches a next state sₜ₊₁. Next, numbers of access times are updated or a new node and a new directed edge are added to the state topology graph. Then, the action value model *Q_{θ}* provides an estimated action value *Q_{θ}*(*sₜ*, *aₜ*). Further, in current training iteration, parameter sets of both the action value model *Q_{θ}* and the action decision-making model *π*_{Ø} are updated once (the two parameter sets are updated without sequential limitation, and may be updated at the same time). Then, a next training iteration is performed. The loss function and the training manner of the action value model *Q_{θ}* are described in operation 404. A loss function and a training manner of the action decision-making model *π*_{Ø} are described in operation 405.

**D3: The training server determines a decision-making loss term of the agent at the current moment based on the decision-making vector and the scoring vector, where the decision-making loss term represents an error between an action that the agent determines to execute and a task expectation.**

In some embodiments, the decision-making loss term of the agent at the current moment t is calculated based on the decision-making vector *π*_{Ø}(*aₜ*|*sₜ*) obtained in operation D1 and the scoring vector *Q_{θ}*(*sₜ*) obtained in operation D2.

In an example, a decision-making loss term is constructed based on a degree of difference between information entropy of the decision-making vector *π*_{Ø}(*aₜ*|*sₜ*) and the scoring vector *Q_{θ}*(*sₜ*)*.* An expression of the decision-making loss term is as follows: ${J}_{π} \left(ϕ\right) {E}_{{s}_{t} ∼ G} \left[{π}_{ϕ}{\left({a}_{t}\left|{s}_{t}\right.\right)}^{T}\left(α log {π}_{ϕ}\left({a}_{t}\left|{s}_{t}\right.\right)-{Q}_{θ}\left({s}_{t}\right)\right)\right]$

*J_{π}*(Ø) represents a decision-making loss term, Ø represents a parameter set of the action decision-making model *π*_{Ø}, ${E}_{{s}_{t} ∼ G}$ represents solving mathematical expectation of a value of each state sₜ in a state topology graph G in the brackets, *π*_{Ø}(*aₜ*|*sₜ*) represents a decision-making vector, *π*_{Ø}(*aₜ*|*sₜ*)*^{T}* represents a transposed vector of the decision-making vector, *α* is a learnable temperature parameter, log *π*_{Ø}(*aₜ*|*sₜ*) represents information entropy of the decision-making vector, the temperature parameter *α* is used for controlling a weight provided by information entropy, and *Q_{θ}*(*sₜ*) represents a scoring vector. *α* used to obtain the target action value *Q_{target}* in operation C34 may be reused as the temperature parameter *α* in the foregoing formula. However, if the target action value *Q_{target}* is not defined by information entropy, a value of the variable *α* may be updated as the parameter set of the action decision-making model is iteratively adjusted. This is not specifically limited in some embodiments.

**D4: The training server iteratively trains the action decision-making model based on the decision-making loss term.**

In some embodiments, the loss function value of the action decision-making model is the same as the decision-making loss term obtained in operation D3. In this case, when a technician sets a decision-making optimization stop condition, a loss function value of the action decision-making model in each training iteration can be calculated in the manner provided in operations D1 to D4, and then it is determined whether the decision-making optimization stop condition is satisfied. If the decision-making optimization stop condition is satisfied, training is stopped to obtain the trained action decision-making model. If the decision-making optimization stop condition is not satisfied, a next training iteration continues to be performed. The decision-making optimization stop condition may be that a loss function value tends to converge, an iteration step count reaches a specified step count, or the like. The decision-making optimization stop condition is not specifically limited herein.

All of the foregoing technical solutions can be combined in any manner to form the embodiments of the present disclosure. Details are not described herein.

According to the method provided in some embodiments, a non-parameterized state topology graph is constructed based on historical trajectories. The state topology graph can fully reflect empirical distribution of actions of the agent, so that information utilization of the historical trajectories is higher and an information volume is increased. Then, training of the action feedback model is guided based on the state topology graph, so that the action feedback model can calculate a more precise estimated feedback value, thereby improving precision of the action feedback model. Further, a training process of the action value model can be constrained based on the state topology graph and the action feedback model, to obtain the action value model with better precision and performance. In this way, the action value model can calculate the estimated action value more precisely, and a human intention or preference can be satisfied to some extent. Finally, the action value model with better precision is used to assist in training to obtain the action decision-making model with better precision, thereby helping precisely determine an action to be executed by the agent in a given state.

In the foregoing embodiment, the training process of the action decision-making model of the agent provided is described in detail. With reference to FIG. 5, for example, the action decision-making model is a policy neural network *π*_{Ø}, the action feedback model is a reward neural network *r̂_{φ}*, and the action value model is an action value neural network *Q_{θ}*, and a possible implementation of the training process is described.

As shown in FIG. 5, the policy neural network *π*_{Ø}, the reward neural network *r̂_{φ}*, and the action value neural network *Q_{θ}* are initialized when an algorithm starts. Next, the policy neural network *π*_{Ø} is used to control the agent to interact with the environment, to collect multiple historical trajectories. Specifically, a state s observed at any moment is inputted into the policy neural network *π*_{Ø}, so that the policy neural network *π*_{Ø} predicts a decision-making vector *π*_{Ø}(*a*|*s*) in the state s. A to-be-executed action a is determined according to the decision-making vector, the agent is controlled to execute the action a, and the agent interacts with the environment after executing the action a, so that the environment updates to a new state s' at a next moment. Then, the environment may input a triplet (s, a, s') into the reward neural network *r̂_{φ}*, to output an estimated feedback value *r̂_{φ}*(*s, a*). Then, a quadruple (*s, a, s', r̂_{φ}*(*s, a*)) is stored into the empirical replay buffer as transition data in one timestep. The foregoing operations are repeatedly performed, until a historical trajectory is obtained when the task of the agent is completed, the task fails, or a specified length is reached. The historical trajectory is stored into the empirical replay buffer in a form of transition data in multiple timesteps.

Further, the state topology graph G is constructed according to a series of pieces of transition data stored in the empirical replay buffer. Specifically, nodes in the state topology graph G are constructed based on observed states in the historical trajectory, and directed edges in the state topology graph G are constructed based on executed actions in the historical trajectory. Because there may be states that have not been observed, there may be actions that have not been executed in the entire action distribution. Therefore, the state topology graph G may be considered as a subset of the entire action distribution in an environment space.

Further, trajectory sampling is performed on the state topology graph G, to obtain multiple pairs of sampling trajectories. Because the efficiency of trajectory sampling is very high, an effective pair of trajectories with a higher information volume can be efficiently constructed. In addition, the trajectory sampling allows to obtain a new sampling trajectory through combination based on topology structures of the state topology graph G. The sampling trajectory is not necessarily a directly obtained historical trajectory, and instead is obtained by combining different trajectory segments in multiple historical trajectories. In this way, the sampling trajectory historically has not occurred, but all the trajectory segments in the sampling trajectory historically have occurred. These sampling trajectories may be presented to a technician or a large model in pairs. The technician or the large model performs annotation to obtain annotation results of all pairs of sampling trajectories. These annotation results reflect preference data of humans (or learned by the large model). Next, the preference data is used as a supervision signal, and the state topology graph G is used to help supervised learning of the reward neural network *r̂_{φ}*, to obtain an optimized reward neural network *r̂_{φ}.* In some embodiments, based on a period, the parameter set *φ* of the reward neural network *r̂_{φ}* is periodically updated according to preference data collected within the period. Each time the parameter set *φ* is updated, an estimated feedback value *r̂_{φ}*(*s, a*) of each directed edge in the state topology graph G may be calculated and annotated again according to a latest rewarding neural network *r̂_{φ}*, to implement update of the estimated feedback values in the entire graph. In this way, utilization of the historical trajectory is maximized, and negative impact caused by a non-stationary reward function is relieved.

Further, an empirical action value function *Q̂* may be derived from the state topology graph G, so that the empirical action value function *Q̂* can calculate an empirical action value *Q̂*(*s*,·) for the state s indicated by each node. Then, a quadruple (*s, a, r̂_{φ}*(*s, a*), *Q̂*(*s*,·)) is used to train the action value neural network *Q_{θ}* and the policy neural network *π*_{Ø} in turn. Specifically, the empirical action value *Q̂*(*s*,·) is used to constrain and regularize the action value neural network *Q_{θ},* so that the empirical action value *Q̂*(*s*,·) is used as a lower bound of an estimated action value *Q̂*(*s*,·) provided by the action value neural network *Q_{θ}.* Therefore, information provided by the empirical distribution of the action can be fully considered, over-estimation of action values by the action value neural network *Q_{θ}* can be avoided, and an over-estimation error and an extrapolation error of the action value neural network *Q_{θ}* can be reduced, so that the action value neural network *Q_{θ}* can estimate an action value of each action in a given environment more precisely. Then, the estimated action value *Q_{θ}*(*s*,·) is used to introduce action value evaluation information for the policy neural network *π*_{Ø}, so that generalizability and policy performance of the policy neural network *π*_{Ø} are finally improved, and training efficiency and learning efficiency of the policy neural network *π*_{Ø} are improved. Therefore, the policy neural network *π*_{Ø} can provide a better policy recommendation for the agent, so as to determine a desirable action that satisfies a human preference or intention, thereby reducing a number of times of human intervention required by the agent in task execution and reducing labor costs.

The action value neural network *Q_{θ}* and the policy neural network *π*_{Ø} may be iteratively trained based on a collaborative training framework. That is, in each iteration, parameter sets *θ* and Ø of both the action value neural network *Q_{θ}* and the policy neural network *π*_{Ø} are updated once. Finally, a trained action value neural network *Q_{θ}* and a trained policy neural network *π*_{Ø} can be obtained.

In an entire training iteration process, as historical trajectories increase, if an existing directed edge in the state topology graph G is found again, a number of access times of the directed edge is updated. If no directed edge indicating an action is found, when an initial node or an arrival node corresponding to the action does not exist in the state topology graph G, the corresponding initial node or arrival node is added, and a corresponding directed edge is newly added to the state topology graph G. In this way, the state topology graph G is continuously improved during adaptive update. Further, the empirical action value function may also periodically update an empirical action value of each directed edge and each node according to a number of access times, thereby adaptively updating and optimizing the empirical action value.

For example, in a scenario of collaborative transport of multiple robot vehicles, based on the preference-based reinforcement learning framework in some embodiments, the robot vehicles may satisfy a human requirement and preference more precisely, for example, when the multiple robot vehicles need to collaboratively move goods of a particular shape and weight, a trained policy neural network *π*_{Ø} may provide an optimal movement, collaboration, and path planning policy for each robot vehicle, to ensure safe, quick, and efficient movement of the goods.

In the foregoing embodiments, construction and update processes of the state topology graph are described in detail, and training processes of the action feedback model, the action value model, and the action decision-making model are described in detail. In some embodiments, a process of using the trained action decision-making model to control an agent to execute an action is described in detail.

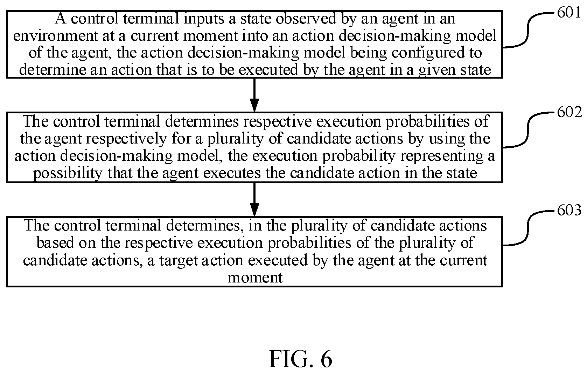

FIG. 6 is a flowchart of an agent action decision-making method according to some embodiments. As shown in FIG. 6, this embodiment is performed by a computer device. The computer device may be the agent 201 or the agent control system 202 in the foregoing implementation environment, or may be another control terminal on which an action decision-making model is installed. For example, the computer device is a control terminal, and this embodiment includes the following operations:
**601: A control terminal inputs a state observed by an agent in an environment at a current moment into an action decision-making model of the agent, the action decision-making model being configured to determine an action that is to be executed by the agent in a given state.**

The action decision-making model is obtained by performing collaborative training based on a state topology graph, an action feedback model, and an action value model, each node in the state topology graph indicates a state, each directed edge connecting a pair of nodes indicates an action, the action feedback model is used for providing a feedback signal generated by the environment for the action executed by the agent, and the action value model is used for assessing impact of the action performed by the agent on the environment. For details of training processes of the action feedback model, the action value model, and the action decision-making model, refer to the foregoing embodiments.

In some embodiments, the training server trains an action decision-making model having better precision and performance in a preference-based reinforcement learning framework by using the agent action decision-making model training method provided in the foregoing embodiments. Then, the training server delivers a parameter set of the action decision-making model to a control terminal of the agent, so that the control terminal obtains the trained action decision-making model.

In some embodiments, a training process of the action decision-making model may be completed by the training server locally, for example, the training server performs offline training locally, or may be completed in cloud, for example, multiple servers jointly perform distributed training to accelerate training efficiency. This is not specifically limited in some embodiments.

In some embodiments, the control terminal of the agent may be a control module built in the agent, or may be a control device independent of the agent. In addition, the same control device may perform macro scheduling on multiple agents, and in this case, the control terminal is also referred to as a master control terminal. This is not specifically limited in some embodiments.

In some embodiments, after the control terminal obtains the trained action decision-making model *π*_{Ø}, for an environment in which the agent resides, if a state s at a current moment is observed in the environment, the state s can be inputted into the action decision-making model *π*_{Ø} of the agent, to perform operation 602.

**602: The control terminal determines execution probabilities of the agent respectively for a plurality of candidate actions through the action decision-making model, the execution probability of each candidate action representing a possibility that the agent executes the corresponding candidate action in the state.**

In some embodiments, after the control terminal inputs the state s into the action decision-making model *π*_{Ø} of the agent, the action decision-making model *π*_{Ø} calculates a decision-making vector *π*_{Ø}(*a*|*s*) for the state s, the decision-making vector *π*_{Ø}(*a*|*s*) includes an execution probability that the agent executes each possible action a in the state s, and each execution probability represents a possibility that the agent executes an action a in the state s. For example, the agent can perform a total of 7 candidate actions: moving forwards, moving backwards, moving leftwards, moving rightwards, jumping, squatting, and keeping still. However, in the state s, the agent moves to a corner, so that the agent cannot move leftwards and move backwards. In this case, the action decision-making model *π*_{Ø} still calculates 7 execution probabilities for the 7 candidate actions, but execution probabilities of moving leftwards and moving backwards approach to 0.

**603: The control terminal determines, in the plurality of candidate actions based on the execution probabilities of the plurality of candidate actions, a target action executed by the agent at the current moment.**

In some embodiments, the control terminal may determine a target action from the multiple candidate actions based on execution probabilities of candidate actions in the decision-making vector *π*_{Ø}(*a*|*s*) in operation 602. The target action is an optimal candidate action that most satisfies a human preference in the current state s and that is planned by the action decision-making model for the agent.

In some embodiments, a candidate action having a largest execution probability may be directly selected as the target action, or a candidate action may be randomly selected as the target action from the first N candidate actions having largest execution probabilities, or sampling may be performed based on probability distribution of the candidate actions according to the execution probabilities, to randomly determine the target action to be performed by the agent, so that a sampling process conforms to the probability distribution. This is not specifically limited in some embodiments.

For example, in a scenario of collaborative transport of multiple robot vehicles, after the action decision-making model *π*_{Ø} is trained, if each robot vehicle is a control terminal of itself, the training server delivers the parameter set of the action decision-making model *π*_{Ø} to each robot vehicle, so that each robot vehicle determines an action and executes the action under the control of the action decision-making model *π*_{Ø} built in the robot vehicle, and the multiple robot vehicles collaboratively transport goods from a start point to an end point to complete a goods transport task. Alternatively, if the multiple robot vehicles have one master control terminal and the master control terminal is responsible for scheduling an action of each robot vehicle, the training server delivers the parameter set of the action decision-making model *π*_{Ø} to the master control terminal of the robot vehicles. The master control terminal determines an action of each robot vehicle under the control of the action decision-making model *π*_{Ø}, and delivers a control signal of each determined action to a corresponding robot vehicle, so that the same master control terminal performs macro scheduling on the multiple robot vehicles, to control the multiple robot vehicles to collaboratively transport goods from a start point to an end point to complete a goods transport task. This is not specifically limited in some embodiments.

All of the foregoing technical solutions can be combined in any manner to form the embodiments of the present disclosure. Details are not described herein.

According to the method provided in some embodiments, coordinated training is performed based on the state topology graph, the action feedback model, and the action value model, to obtain the action decision-making model having better performance and better generalizability. In this way, in a given state of the agent, the action decision-making model can determine a desirable action that satisfies a human preference or intention for the agent, for example, it represents that the agent can understand a human preference more precisely, reducing a number of times of human intervention required by the agent in task execution, and reducing labor costs.

In the foregoing embodiment, how to determine an action of an agent in an application scenario based on the action decision-making model trained based on a preference-based reinforcement learning algorithm is described in detail. In the preference-based reinforcement learning algorithm, the empirical action value function is used to facilitate trajectory sampling in the state topology graph, and the action value model based on a neural network is regularized to implement efficient learning. Experiments and tests show that the algorithm provided in some embodiments surpasses other preference-based reinforcement learning algorithms in various complex tasks, and greatly improves human feedback efficiency. The human feedback efficiency is referred to as feedback efficiency for short, and refers to how to maximize learning effect with limited human feedbacks (preference data annotated by human experts is usually expensive, and some algorithms usually need many human feedbacks for learning, and therefore, the human feedback efficiency is relatively low). Based on aligned empirical estimation, the algorithm provided in some embodiments has clear advantages in performance comparison with other conventional algorithms, especially in a scenario in which only limited human feedback annotations are available. At the same time, the algorithm provided in some embodiments can train an accurate action value model and a better action decision-making model.

The following describes test performance of some tasks in different solutions in a test scenario.

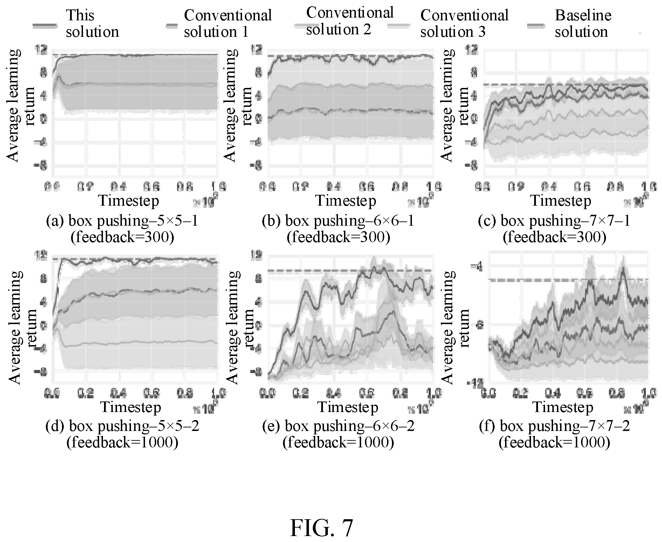

FIG. 7 is a diagram of comparing performance in a box pushing task by an agent according to some embodiments. As shown in FIG. 7, a box pushing task by a robot is selected as an experiment task in a test scenario. For a robot, the box pushing task is a complex task. This solution, solutions 1 to 3, and a baseline solution 4 are used to respectively train an action decision-making model of a robot vehicle, action decision-making models obtained through training in the solutions are used to control the robot to complete a box pushing task, and average reward learning curves of the solutions are drawn. (a) to (c) are test results of average reward learning curves when there are 300 human-annotated feedbacks; and (d) to (f) are test results of average reward learning curves when there are 1000 human-annotated feedbacks. Environment sizes of (a) and (d) are both 5 × 5; environment sizes of (b) and (e) are both 6 × 6; environment sizes of (c) and (f) are both 7 × 7; and a unit of the environment size is a size specified by a map scale.

(a) to (f) in FIG. 7 show comparison of 6 groups of average reward learning curves. A horizontal axis is a time axis (timestep), and a vertical axis is an average learning return (Episode Return). A higher average learning return indicates better performance of the action decision-making model. In comparison of each group of average reward learning curves, in each experiment task, the baseline solution 4 indicates highest performance obtained by using a real reward function. Therefore, the baseline solution 4 is drawn as a horizontal line, and represents an upper performance bound of the experiment task.

It may be clearly learned from FIG. 7 that this solution not only exceeds the current solutions 1 to 3 in performance, but also has very high sample efficiency. In addition, at an early training stage, this solution can quickly achieve high performance on most tasks, and the speed is significantly faster than that of the solutions 1 to 3. In this solution, only a small number of human preference annotations (for example, annotation results of pairs of trajectories or pairs of segments by humans, also referred to as preference data) are needed, to approach the performance of the baseline solution, and feedback efficiency is very high.

In addition, it may be further observed from FIG. 7 that some baseline solutions are significantly affected by a random factor in some tasks, and have unstable performance in some experiments, resulting in large fluctuation of a learning curve. Besides, learning curves of some solutions in more difficult tasks have a downward trend. This indicates that these solutions are sensitive to trajectory sample quality. Specifically, when many sampled pairs of trajectories are of low quality, training of the action value model may be affected, thereby affecting performance of an overall policy (for example, the action decision-making model).

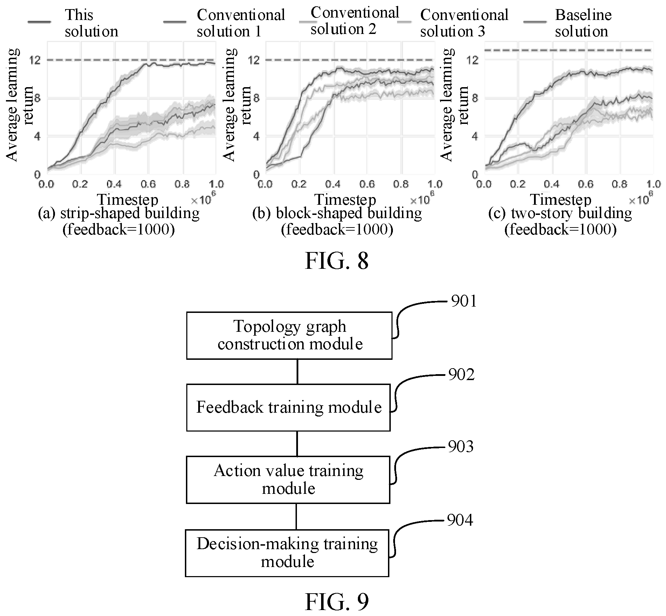

FIG. 8 is a diagram of comparing performance of robots in a building task according to some embodiments. As shown in FIG. 8, in a robot construction field, a robot construction task is selected as an experiment task in a test scenario. For a robot, the construction task is a complex task. During test, for a CraftEnv environment in the robot construction field, three construction tasks, for example, a strip-shaped building, a block-shaped building, and a simple two-story building, are selected to perform test research. This solution, the solutions 1 to 3, and the baseline solution 4 are used to respectively train an action decision-making model of a robot, and action decision-making models obtained through training in the solutions are used to control the robot to complete the three construction tasks, and average reward learning curves of the solutions are drawn.

(a) to (c) in FIG. 8 show comparison of three groups of average reward learning curves. (a) is a construction task of a strip-shaped building, (b) is a construction task of a block-shaped building, and (c) is a construction task of a two-story building. A horizontal axis is a time axis, and a vertical axis is an average learning return. In addition, human-annotated feedbacks of the three construction tasks are all 1000. These tasks fully show complexity and diversity of building tasks in the real world, and require an agent robot (for example, an agent) to precisely operate building components to satisfy building design requirements.

It can be clearly seen from FIG. 8 that this solution is superior to the solutions 1 to 3 in algorithm performance, but also has a great improvement in feedback efficiency. Although a number of samples used in this solution is far less than that in the solution 2, performance of this solution is already equivalent to that of the solution 2, and even exceeds that of the solution 2. Specifically, in the strip-shaped building task, only 30% of samples are used in this solution, but the average performance has exceeded that of the solution 2. This result may be observed by comparing curves representing this solution and the solution 2 in FIG. 8. The performance of this solution is excellent. These research results verify that when processing a complex task, this solution not only can implement efficient learning, but also can significantly reduce a number of needed feedbacks, thereby greatly improving learning efficiency.

The state topology graph used in some embodiments uses a simple non-parameterized model, for example, a graph model, but is not limited to a non-parameterized model or a topology structure thereof, which may be replaced with various novel and effective model structures according to requirements. In addition, in this solution, an underlying reinforcement learning algorithm is not fixed. During actual application, a proper reinforcement learning algorithm may be selected according to a scenario and requirement. At the same time, the learning framework of this solution may also be combined with other technologies, for example, exploration of unsupervised learning, time-sequence data extension, and data augmentation by using pseudo labels.

FIG. 9 is a schematic structural diagram of an agent action decision-making model training apparatus according to some embodiments. As shown in FIG. 9, the apparatus includes:
a topology graph construction module 901, configured to construct a state topology graph based on a plurality of historical trajectories of an agent, each historical trajectory including a plurality of actions, each action being used to control a state transition, the state topology graph containing a plurality of nodes each indicating a state and a plurality of directed edges each connecting a pair of the nodes and representing a respective action;
a feedback training module 902, configured to train an action feedback model of the agent based on the state topology graph, the action feedback model being configured to provide, for an action executed by the agent, an estimated feedback value representing a feedback signal generated by an environment of the agent;
an action value training module 903, configured to train an action value model of the agent based on the state topology graph and the action feedback model, the action value model being configured to provide, for an action executed by the agent, an estimated action value measuring an impact of the action on the environment; and
a decision-making training module 904, configured to train an action decision-making model of the agent based on the action value model, the action decision-making model being configured to determine a target action that is to be executed by the agent in a given state.

When the agent action decision-making model training apparatus provided in this embodiment trains an agent action decision-making model, division of the foregoing functional modules is only used as an example. During actual application, the functions can be allocated to and completed by different functional modules as required. To be specific, an internal structure of a computer device (for example, a training server) is divided into different functional modules, to complete all or a part of the functions described above. In addition, the agent action decision-making model training apparatus provided in this embodiment is based on the same concept as the embodiments of the agent action decision-making model training method. For an implementation process thereof, refer to the embodiments of the agent action decision-making model training method.

All of the foregoing technical solutions can be combined in any manner to form the embodiments of the present disclosure. Details are not described herein.

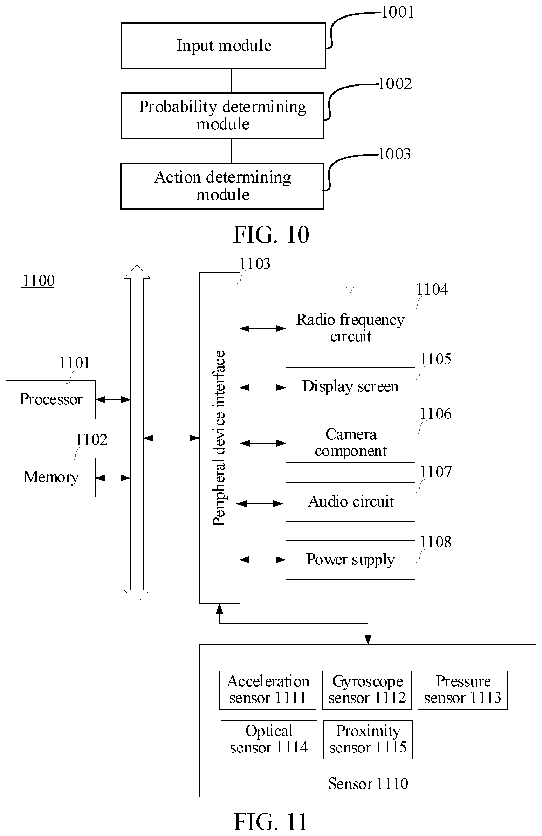

FIG. 10 is a schematic structural diagram of an agent action decision-making apparatus according to some embodiments. As shown in FIG. 10, the apparatus includes:
an input module 1001, configured to input a state observed by an agent in an environment at a current moment into an action decision-making model of the agent, the action decision-making model being configured to determine an action that is to be executed by the agent in a given state;
a probability determining module 1002, configured to determine execution probabilities of the agent respectively for a plurality of candidate actions through the action decision-making model, the execution probability of each candidate action representing a possibility that the agent executes the candidate action in the state; and
an action determining module 1003, configured to determine, in the plurality of candidate actions based on the execution probabilities of the plurality of candidate actions, a target action to be executed by the agent at the current moment;
the action decision-making model being obtained by performing collaborative training based on a state topology graph, an action feedback model, and an action value model, each node in the state topology graph indicating a state, each directed edge connecting a pair of nodes indicating an action, the action feedback model being configured to provide a feedback signal generated by the environment for the action executed by the agent, the action value model being configured to provide an estimated action value of the action performed by the agent, and the estimated action value indicating a metric value used for measuring impact of the action performed by the agent on the environment.

When the agent action decision-making apparatus provided in this embodiment determines an agent action, division of the foregoing functional modules is only used as an example. During actual application, the functions can be allocated to and completed by different functional modules as required. To be specific, an internal structure of a computer device (for example, an agent or a control terminal of an agent) is divided into different functional modules, to complete all or a part of the functions described above. In addition, the agent action decision-making apparatus provided in this embodiment belongs to the same concept as the embodiments of the agent action decision-making method. For an implementation process thereof, refer to the embodiments of the agent action decision-making method.

All of the foregoing technical solutions can be combined in any manner to form the embodiments of the present disclosure. Details are not described herein.

FIG. 11 is a schematic structural diagram of a control terminal according to some embodiments of the disclosure. FIG. 11 exemplarily shows a control terminal as a computer device. The control terminal is configured to control an action of an agent, and may be a control system built into the agent, or may be a control device independent of the agent. In some embodiments, device types of the control terminal 1100 include: a smartphone, a tablet computer, a Moving Picture Experts Group Audio Layer III (MP3) player, a Moving Picture Experts Group Audio Layer IV (MP4) player, a notebook computer, or a desktop computer. The control terminal 1100 may also be referred to as another name such as a user device, a portable control terminal, a laptop control terminal, or a desktop control terminal.

Generally, the control terminal 1100 includes a processor 1101 and a memory 1102.

In some embodiments, the processor 1101 includes one or more processing cores, for example, a 4-core processor or an 8-core processor. In some embodiments, the processor 1101 may be implemented in at least one hardware form of a digital signal processor (DSP), a field-programmable gate array (FPGA), and a programmable logic array (PLA). In some embodiments, the processor 1101 includes a main processor and a coprocessor. The main processor is a processor configured to process data in an awake state, and is also referred to as a central processing unit (CPU). The coprocessor is a processor with low power consumption configured to process data in a standby state. In some embodiments, the processor 1101 is integrated with a graphics processing unit (GPU). The GPU is configured to render and draw content that may be displayed on a display screen. In some embodiments, the processor 1101 further includes an artificial intelligence (AI) processor. The AI processor is configured to process computing operations related to machine learning.

In some embodiments, the memory 1102 include one or more computer-readable storage mediums. In some embodiments, the computer-readable storage medium is non-transient. In some embodiments, the memory 1102 further includes a high-speed random access memory and a nonvolatile memory, for example, one or more magnetic disk storage devices or flash storage devices. In some embodiments, the non-transient computer readable storage medium in the memory 1102 is configured to store at least one segment of program code, and the at least one segment of program code is used by the processor 1101 to implement the agent action decision-making method provided in some embodiments.

In some embodiments, the control terminal 1100 may include: a peripheral device interface 1103 and at least one peripheral device. The processor 1101, the memory 1102, and the peripheral device interface 1103 may be connected by a bus or a signal cable. Each peripheral device can be connected to the peripheral device interface 1103 by using a bus, a signal cable, or a circuit board. Specifically, the peripheral device includes: at least one of a radio frequency circuit 1104, a display screen 1105, a camera component 1106, an audio circuit 1107, and a power supply 1108.

The peripheral device interface 1103 may be configured to connect the at least one peripheral device related to input/output (I/O) to the processor 1101 and the memory 1102. In some embodiments, the processor 1101, the memory 1102, and the peripheral device interface 1103 are integrated on the same chip or circuit board. In some other embodiments, any one or two of the processor 1101, the memory 1102, and the peripheral device interface 1103 may be implemented on a single chip or circuit board. This is not limited in this embodiment.

The radio frequency (RF) circuit 1104 is configured to receive and transmit a radio frequency signal, also referred to as an electromagnetic signal. The radio frequency circuit 1104 communicates with a communication network and other communication devices through the electromagnetic signal. The radio frequency circuit 1104 converts an electric signal into an electromagnetic signal for transmission, or converts a received electromagnetic signal into an electric signal. In some embodiments, the radio frequency circuit 1104 includes an antenna system, an RF transceiver, one or more amplifiers, a tuner, an oscillator, a digital signal processor, a codec chipset, a subscriber identity module card, and the like. In some embodiments, the radio frequency circuit 1104 communicate with another control terminal by using at least one wireless communication protocol. The wireless communication protocol includes, but is not limited to, a metropolitan area network, various generations of mobile communication networks (2G, 3G, 4G, and 5G), a wireless local area network, and/or a wireless fidelity (Wi-Fi) network. In some embodiments, the radio frequency circuit 1104 further includes a circuit related to near field communication (NFC). This is not limited in the disclosure.

The display screen 1105 is configured to display a user interface (UI). In some embodiments, the UI include a graph, a text, an icon, a video, and any combination thereof. When the display screen 1105 is a touch display screen, the display screen 1105 is further capable of collecting touch signals on or above a surface of the display screen 1105. The touch signal may be inputted to the processor 1101 for processing as a control signal. In some embodiments, the display screen 1105 is further configured to provide a virtual button and/or a virtual keyboard that are/is also referred to as a soft button and/or a soft keyboard. In some embodiments, there is one display screen 1105, disposed on a front panel of the control terminal 1100. In some other embodiments, there are at least two display screens 1105, respectively disposed on different surfaces of the control terminal 1100 or designed in a foldable shape. In still some other embodiments, the display screen 1105 is a flexible display screen, disposed on a curved surface or a folded surface of the control terminal 1100. Even, in some embodiments, the display screen 1105 is further set in a non-rectangular irregular pattern, for example, a special-shaped screen. In some embodiments, the display screen 1105 is manufactured using a material such as a liquid crystal display (LCD) or an organic light-emitting diode (OLED).

The camera component 1106 is configured to capture images or videos. In some embodiments, the camera component 1106 includes a front-facing camera and a rear-facing camera. Generally, the front-facing camera is disposed on the front panel of the control terminal, and the rear-facing camera is disposed on a back surface of the control terminal. In some embodiments, there are at least two rear cameras, which are respectively any of a main camera, a depth-of-field camera, a wide-angle camera, and a telephoto camera, to achieve background blur through fusion of the main camera and the depth-of-field camera, panoramic photographing and virtual reality (VR) photographing through fusion of the main camera and the wide-angle camera, or other fusion photographing functions. In some embodiments, the camera component 1106 further includes a flash. In some embodiments, the flash is either a single-color temperature flash or a dual-color temperature flash. The dual-color temperature flash is a combination of a warm light flash and a cold light flash, and may be used for light compensation under different color temperatures.

In some embodiments, the audio circuit 1107 includes a microphone and a speaker. The microphone is configured to acquire sound waves of a user and an environment, and convert the sound wave into an electrical signal to input to the processor 1101 for processing, or input to the radio frequency circuit 1104 for implementing voice communication. For the purpose of stereo acquisition or noise reduction, there are multiple microphones, disposed at different parts of the control terminal 1100 respectively. In some embodiments, the microphone is an array microphone or an omnidirectional collection microphone. The speaker is configured to convert electric signals from the processor 1101 or the radio frequency circuit 1104 into sound waves. In some embodiments, the speaker is a film speaker, or a piezoelectric ceramics speaker. When the speaker is the piezoelectric ceramic speaker, the speaker not only can convert an electric signal into acoustic waves audible to a human being, but also can convert an electric signal into acoustic waves inaudible to a human being, for ranging and other purposes. In some embodiments, the audio circuit 1107 further includes an earphone jack.

The power supply 1108 is configured to supply power to components in the control terminal 1100. In some embodiments, the power supply 1108 is an alternating current, a direct current, a disposable battery, or a rechargeable battery. When the power supply 1108 includes a rechargeable battery, the rechargeable battery supports wired charging or wireless charging. The rechargeable battery is further configured to support a fast charge technology.

In some embodiments, the control terminal 1100 further includes one or more sensors 1110. The one or more sensors 1110 include, but are not limited to: an acceleration sensor 1111, a gyroscope sensor 1112, a pressure sensor 1113, an optical sensor 1114, and a proximity sensor 1115.

In some embodiments, the acceleration sensor 1111 detects a magnitude of acceleration on three coordinate axes of a coordinate system established with the control terminal 1100. For example, the acceleration sensor 1111 is configured to detect components of gravity acceleration on the three coordinate axes. In some embodiments, the processor 1101 controls, according to a gravity acceleration signal acquired by the acceleration sensor 1111, the display screen 1105 to display the user interface in a landscape view or a portrait view. The acceleration sensor 1111 is further configured to acquire action data of a game or a user.

In some embodiments, the gyroscope sensor 1112 detects a body direction and a rotation angle of the control terminal 1100, and the gyroscope sensor 1112 works with the acceleration sensor 1111 to acquire a 3D action performed by the user on the control terminal 1100. The processor 1101 may implement the following functions based on data acquired by the gyroscope sensor 1112: action sensing (for example, changing the UI based on a tilt operation by the user), image stabilization at shooting, game control, and inertial navigation.

In some embodiments, the pressure sensor 1113 is disposed at a side frame of the control terminal 1100 and/or a lower layer of the display screen 1105. When the pressure sensor 1113 is disposed at the side frame of the control terminal 1100, a holding signal of the user on the control terminal 1100 may be detected. The processor 1101 performs left and right hand recognition or a quick operation based on the holding signal acquired by the pressure sensor 1113. When the pressure sensor 1113 is disposed on the low layer of the display screen 1105, the processor 1101 controls an operable control on the UI based on a pressure operation by the user on the display screen 1105. The operable control includes at least one of a button control, a scroll-bar control, an icon control, and a menu control.

The optical sensor 1114 is configured to acquire ambient light intensity. In some embodiments, the processor 1101 controls display brightness of the display screen 1105 based on the ambient light intensity acquired by the optical sensor 1114. Specifically, when the ambient light intensity is high, the display brightness of the display screen 1105 is increased. When the ambient light intensity is low, the display brightness of the display screen 1105 is decreased. In another embodiment, the processor 1101 may further dynamically adjust a camera parameter of the camera component 1106 based on the ambient light intensity acquired by the optical sensor 1114.

The proximity sensor 1115, also referred to as a distance sensor, is generally disposed on the front panel of the control terminal 1100. The proximity sensor 1115 is configured to acquire a distance between a user and a front surface of the control terminal 1100. In some embodiments, when the proximity sensor 1115 detects that the distance between the user and the front surface of the control terminal 1100 gradually becomes small, the display screen 1105 is controlled by the processor 1101 to switch from a screen-on state to a screen-off state. When the proximity sensor 1115 detects that the distance between the user and the front surface of the control terminal 1100 gradually becomes large, the display screen 1105 is controlled by the processor 1101 to switch from the screen-off state to the screen-on state.

A person skilled in the art can understand that the structure shown in FIG. 11 does not constitute a limitation on the control terminal 1100, and can include more or fewer components than those shown in the figure, or combine some components, or use different component arrangements.

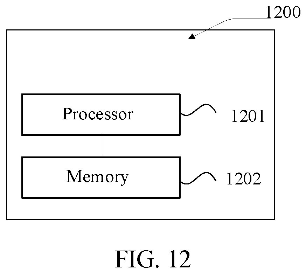

FIG. 12 is a schematic structural diagram of a training server according to some embodiments of the disclosure. FIG. 12 exemplarily shows a training server as a computer device. The training server 1200 may vary considerably depending on configuration or performance, and the training server 1200 may include one or more central processing units (CPU) 1201 and one or more memories 1202. The memory 1202 has at least one computer program stored therein. The at least one computer program is loaded and executed by one or more processors 1201, to implement the agent action decision-making model training method provided in the above embodiments. In some embodiments, the training server 1200 further includes components such as a wired or wireless network interface, a keyboard, and an input/output interface, to facilitate input and output. The training server 1200 further includes another component configured to implement a function of a device. Details are not described herein.

In an example embodiment, a computer readable storage medium is further provided, for example, a memory including at least one computer program. The at least one computer program may be executed by a processor in a terminal to complete the agent action decision-making model training method or the agent action decision-making method in the foregoing embodiments. For example, the computer-readable storage medium includes a read-only memory (ROM), a random access memory (RAM), a compact disc read-only memory (CD-ROM), a magnetic tape, a floppy disk, and an optical data storage device.

In an exemplary embodiment, a computer program product is further provided, including one or more computer programs, and the one or more computer programs are stored in a computer-readable storage medium. One or more processors of a computer device can read the one or more computer programs from the computer readable storage medium, and the one or more processors execute the one or more computer programs, so that the computer device can perform the agent action decision-making model training method or the agent action decision-making method in the foregoing embodiments.

A person of skill in the art may understand that all or some of the operations of the foregoing embodiments may be implemented by hardware, or may be implemented by a program instructing relevant hardware. In some embodiments, the program is stored in a computer-readable storage medium. In some embodiments, the storage medium is a read-only memory, a magnetic disk, an optical disc, or the like.

The foregoing descriptions are merely embodiments of the disclosure, and are not intended to limit the disclosure. Any modification, equivalent replacement, improvement and the like made within the spirit and principle of the disclosure shall fall within the protection scope of the disclosure.

## Claims

1. An agent action decision-making model training method, performed by a computer device, the method comprising:
constructing a state topology graph based on a plurality of historical trajectories of an agent, the plurality of historical trajectories each comprising a plurality of actions for respectively controlling a state transition, the state topology graph containing a plurality of nodes each indicating a state and a plurality of directed edges each connecting a pair of the nodes and representing a respective action;
training an action feedback model of the agent based on the state topology graph, the action feedback model being configured to provide, for an action executed by the agent, an estimated feedback value representing a feedback signal generated by an environment of the agent;
training an action value model of the agent based on the state topology graph and the action feedback model, the action value model being configured to provide, for an action executed by the agent, an estimated action value measuring an impact of the action on the environment; and
training an action decision-making model of the agent based on the action value model, the action decision-making model being configured to determine a target action that is to be executed by the agent in a given state.

2. The agent action decision-making model training method according to claim 1, wherein the constructing the state topology graph comprises:
obtaining an initialized state topology graph;
querying, for each action in each of the plurality of historical trajectories, the initialized state topology graph for a directed edge representing the action;
updating, in response to that the directed edge representing the action is found, a number of access times associated with the directed edge, the number of access times indicating a query frequency of the directed edge;
determining, in response to that the directed edge representing the action is not found, an initial state and an arrival state associated with the action, and querying the initialized state topology graph for an initial node representing the initial state and an arrival node representing the arrival state;
adding, in response to that the arrival node representing the arrival state is not found, a new arrival node representing the arrival state to the initialized state topology graph;
adding, in response to that the initial node representing the initial state is not found, a new initial node representing the initial state to the initialized state topology graph; and
adding a new directed edge pointing from the initial node to the arrival node to the initialized state topology graph.

3. The agent action decision-making model training method according to any one of claims 1 and 2, wherein the training an action feedback model comprises:
performing trajectory sampling based on the state topology graph, to obtain a plurality of pairs of sampling trajectories each comprising two sampling trajectories having a same length;
collecting annotation results each for a respective pair of the plurality of pairs of sampling trajectories and each indicating preference levels for different sampling trajectories in the respective pair with respect to a task executed by the agent; and
training the action feedback model based on the state topology graph and the annotation results.

4. The agent action decision-making model training method according to claim 3, wherein the performing trajectory sampling comprises:
randomly sampling from a node set of the state topology graph, to obtain a plurality of sampling points;
using each of the plurality of sampling points as a start point to perform the trajectory sampling along one or more directed edges starting from the start point, and stopping the trajectory sampling in a case that a trajectory length of the trajectory sampling reaches a sampling length, to obtain a sampling trajectory of the trajectory length; and
pairing the plurality of sampling trajectories according to respective trajectory lengths of the plurality of sampling trajectories, to obtain the plurality of pairs of sampling trajectories.

5. The agent action decision-making model training method according to claim 4, wherein performing the trajectory sampling along the directed edge starting from the start point comprises:
determining, in response to there being only one directed edge starting from a current node in the sampling trajectory, an arrival node to which the only one directed edge points as a next node, and continuing the trajectory sampling along one or more directed edges starting from the next node, and stopping sampling when the trajectory length reaches the sampling length; and
selecting, in response to there being at least two directed edges starting from the current node, a directed edge having a highest or a lowest empirical action value from the at least two directed edges, determining an arrival node to which the selected directed edge points as the next node, and continuing the trajectory sampling along the one or more directed edges starting from the next node, wherein the empirical action value is determined based on an empirical action value function being configured to provide, based on the state topology graph, an empirical action value of an action performed by the agent.

6. The agent action decision-making model training method according to any one of claims 3 and 4, further comprising:
updating an estimated feedback value of each directed edge in the state topology graph after the training of the action feedback model is completed, the estimated feedback value representing an estimated feedback signal generated by the environment in response to the agent executing an action represented by the directed edge.

7. The agent action decision-making model training method according to any one of claims 1 to 6, wherein training the action value model comprises:
obtaining, in each iteration of training the action value model, an estimated action value of an action represented by each directed edge in the state topology graph;
obtaining a constraint loss term based on an empirical action value function and the estimated action value, the constraint loss term representing a difference between an empirical distribution of action values derived from the state topology graph and a model distribution of action values predicted by the action value model;
obtaining an action value loss term based on the action feedback model and the estimated action value, the action value loss term representing a difference between the estimated action value for an action and a target action value, and the target action value representing an optimized action value based on an action distribution; and
iteratively training the action value model based on the constraint loss term and the action value loss term.

8. The agent action decision-making model training method according to claim 7, wherein the obtaining a constraint loss term based on an empirical action value function and the estimated action value comprises:
determining, from the state topology graph, a plurality of nodes of interest each indicating a state to which the agent pays attention during task implementation;
determining, for each of the plurality of nodes of interest, based on the empirical action value function, an empirical action value of each action in a support action set of the node of interest, the support action set comprising actions represented by directed edges starting from the node of interest;
determining an action value error of each of the plurality of nodes of interest based on the empirical action value and the estimated action value of each action in the support action set, the action value error representing a difference between the empirical action value and the estimated action value of each action in the support action set; and
obtaining the constraint loss term based on the action value error of each node of interest.

9. The agent action decision-making model training method according to claim 7, wherein determining the action value error comprises:
determining an empirical action value vector of the node of interest based on the empirical action value of each action in the support action set;
determining an estimated action value vector of the node of interest based on the estimated action value of each action in the support action set; and
determining the action value error based on the empirical action value vector and the estimated action value vector.

10. The agent action decision-making model training method according to any one of claims 6 to 9, wherein obtaining the action value loss term comprises:
randomly sampling, from a directed edge set of the state topology graph, to obtain a plurality of sampled edges, and determining, for each of the plurality of sampled edges, a sampling state indicated by an initial node of the sampled edge and a sampling action represented by the sampled edge;
determining, based on the action feedback model, an estimated feedback value for the agent executing the sampling action in the sampling state;
determining, based on the action decision-making model, an execution probability that the agent executes the sampling action in the sampling state;
determining a target action value of the sampling action based on the estimated feedback value, the execution probability, and the estimated action value; and
obtaining the action value loss term based on the target action value and the estimated action value.

11. The agent action decision-making model training method according to any one of claims 1 to 10, wherein training the action decision-making model of the agent comprises:
determining, in each iteration, a decision-making vector of the agent in a state of a current moment through the action decision-making model, the decision-making vector representing respective probabilities with which the agent is to execute a plurality of actions at the current moment;
determining a scoring vector of action values of the agent in the state of the current moment based on the action value model, the scoring vector representing respective estimated action values of the plurality of actions to be executed by the agent at the current moment;
determining a decision-making loss term of the agent at the current moment based on the decision-making vector and the scoring vector, the decision-making loss term representing an error between an action that the agent determines to execute and a task expectation; and
iteratively training the action decision-making model based on the decision-making loss term.

12. The agent action decision-making model training method according to any one of claims 1 to 11, further comprising:
sampling from a node set of the state topology graph when an action value update condition is satisfied, to obtain a plurality of to-be-updated nodes;
determining, for each of the plurality of to-be-updated nodes, a support action set comprising an action set indicated by directed edges starting from the to-be-updated node;
updating an empirical action value of each action in the support action set; and
assigning a maximum value of empirical action values of actions in the support action set to an empirical action value of the to-be-updated node.

13. The agent action decision-making model training method according to claim 12, wherein the updating an empirical action value of each action in the support action set comprises:
determining, for each action in the support action set, a plurality of target nodes being able to be reached by executing the action starting from the to-be-updated node;
determining, based on a number of access times of each directed edge that connects the to-be-updated node to each of the plurality of target nodes, an empirical transition probability that the to-be-updated node reaches each target node through the action;
determining, through the action feedback model, an estimated feedback value of executing the action from the to-be-updated node;
updating the empirical action value of the action based on an empirical transition probability that the to-be-updated node reaches each target node through the action, the estimated feedback value, and the empirical action value of each target node; and
assigning a maximum value of candidate action values of the actions in the support action set to an empirical action value for executing the action from the to-be-updated node.

14. An agent action decision-making method, performed by a computer device, comprising:
inputting a state observed by an agent in an environment at a current moment into an action decision-making model of the agent;
determining execution probabilities of the agent respectively for a plurality of candidate actions through the action decision-making model, the execution probabilities each representing a possibility that the agent executes a respective candidate action of the plurality of candidate actions in the state; and
determining, in the plurality of candidate actions based on the execution probabilities of the plurality of candidate actions, a target action to be executed by the agent at the current moment;
wherein the action decision-making model is obtained by performing collaborative training based on a state topology graph, an action feedback model, and an action value model, the state topology graph containing a plurality of node each indicating a state and a plurality of directed edges each connecting a pair of the nodes and representing a respective action, the action feedback model is configured to provide, for an action executed by the agent, an estimated feedback value representing a feedback signal generated by the environment, and the action value model is configured to provide, for an action executed by the agent, an estimated action value measuring an impact of the action on the environment.

15. An agent action decision-making model training apparatus, performed by a computer device, the apparatus comprising:
a topology graph construction module, configured to construct a state topology graph based on a plurality of historical trajectories of an agent, the plurality of historical trajectories each comprising a plurality of actions for respectively controlling a state transition, the state topology graph containing a plurality of nodes each indicating a state and a plurality of directed edges each connecting a pair of the nodes and representing a respective action;
a feedback training module, configured to train an action feedback model of the agent based on the state topology graph, the action feedback model being configured to provide, for an action executed by the agent, an estimated feedback value representing a feedback signal generated by an environment of the agent;
an action value training module, configured to train an action value model of the agent based on the state topology graph and the action feedback model, the action value model being configured to provide, for an action executed by the agent, an estimated action value measuring an impact of the action on the environment; and
a decision-making training module, configured to train an action decision-making model of the agent based on the action value model, the action decision-making model being configured to determine a target action that is to be executed by the agent in a given state.

16. An agent action decision-making apparatus, executed by a computer device, comprising:
an input module, configured to input a state observed by an agent in an environment at a current moment into an action decision-making model of the agent, the action decision-making model being configured to determine an action that is to be executed by the agent in a given state;
a probability determining module, configured to determine execution probabilities of the agent respectively for a plurality of candidate actions through the action decision-making model, the execution probabilities each representing a possibility that the agent executes a respective candidate action of the plurality of candidate actions in the state; and
an action determining module, configured to determine, in the plurality of candidate actions based on the execution probabilities of the plurality of candidate actions, a target action to be executed by the agent at the current moment;
wherein the action decision-making model is obtained by performing collaborative training based on a state topology graph, an action feedback model, and an action value model, the state topology graph containing a plurality of node each indicating a state and a plurality of directed edges each connecting a pair of the nodes and representing a respective action, the action feedback model is configured to provide, for an action executed by the agent, an estimated feedback value representing a feedback signal generated by the environment, and the action value model is configured to provide, for an action executed by the agent, an estimated action value measuring an impact of the action on the environment.

17. A computer device, comprising one or more processors and one or more memories, the one or more memories having at least one computer program stored therein, and the at least one computer program being loaded and executed by the one or more processors to implement the agent action decision-making model training method according to any one of claims 1 to 13 or the agent action decision-making method according to claim 14.

18. A computer readable storage medium, having at least one computer program stored therein, the at least one computer program being loaded and executed by a processor to implement the agent action decision-making model training method according to any one of claims 1 to 13 or the agent action decision-making method according to claim 14.

19. A computer program product, comprising at least one computer program, the at least one computer program being loaded and executed by a processor to implement the agent action decision-making model training method according to any one of claims 1 to 13 or the agent action decision-making method according to claim 14.
